Europäisches Patentamt

European Patent Office

Office européen des brevets

(11) Numéro de publication: **0 133 095**

**A1**

# (12) DEMANDE DE BREVET EUROPEEN

(21) Numéro de dépôt: **84401476.1**

(22) Date de dépôt: **12.07.84**

(51) Int. Cl.⁴: **B 01 D 1/28**
**B 01 D 3/00**

(30) Priorité: **13.07.83 FR 8311669**
**28.12.83 FR 8320917**
**28.12.83 FR 8320918**
**28.12.83 FR 8320919**

(43) Date de publication de la demande:
**13.02.85 Bulletin 85/7**

(84) Etats contractants désignés:
**AT BE CH DE FR GB IT LI LU NL SE**

(71) Demandeur: **LAGUILHARRE S.A.**
**2, avenue du 18 Juin 1940**
**F-92500 Rueil Malmaison(FR)**

(72) Inventeur: **Ciboit, Jacques Jean**
**164 Bis, rue de l'Université**
**F-75007 Paris(FR)**

(74) Mandataire: **Kedinger, Jean-Paul et al,**
**c/o Cabinet Malemont 42, avenue du Président Wilson**
**F-75116 Paris(FR)**

(54) **Procédé pour relever le niveau thermique des calories contenues dans un fluide caloporteur et utilisation des calories résultantes pour le chauffage d'un fluide.**

(57) Procédé pour relever le niveau thermique des calories contenues dans un fluide caloporteur (327). Ce procédé se caractérise en ce qu'il consiste à prélever (en 332) des calories sur le fluide caloporteur et à soumettre les calories ainsi prélevées à l'action d'une ou plusieurs pompes à chaleur (338, 124), l'une (124) de ces pompes à chaleur étant celle mise en oeuvre dans un cycle (101, 102) de concentration d'un produit liquide (105).

L'invention comprend en outre un procédé pour chauffer un fluide (345) se caractérisant en ce qu'il consiste à transférer à ce fluide des calories (347) prélevées sur le cycle de concentration défini ci-dessus.

FIG. 16

EP 0 133 095 A1

Procédé pour relever le niveau thermique des calories contenues dans un
fluide caloporteur et utilisation des calories résultantes pour le chauffage
d'un fluide

La présente invention a pour objet un procédé pour relever le niveau thermique des calories contenues dans un fluide caloporteur.

Il est fréquent que dans l'industrie, par exemple dans l'industrie laitière, l'on dispose de fluides caloporteurs produits en tant qu'effluents de diverses installations de traitement. Quand ces fluides contiennent des calories à niveau thermique élevé, ils peuvent servir comme sources de chaleur à diverses fins et notamment pour réchauffer un fluide froid destiné à être utilisé, après réchauffage, dans d'autres installations de traitement. Toutefois, quand les calories de ces fluides caloporteurs sont à un bas niveau thermique, celles-ci ne peuvent être utilisées efficacement sans relèvement préalable de leur niveau thermique. Or, les procédés connus à ce jour pour réaliser un tel relèvement sont onéreux et pour cette raison on préfère souvent purement et simplement renoncer à utiliser ces calories.

Le but de la présente invention est de remédier à cet inconvénient et pour ce faire, elle propose un procédé pour relever le niveau thermique desdites calories, ce procédé se caractérisant en ce qu'il consiste à prélever des calories sur le fluide caloporteur et à soumettre les calories ainsi prélevées à l'action d'une ou plusieurs pompes à chaleur, l'une de ces pompes à chaleur étant celle mise en oeuvre dans un cycle de concentration d'un produit liquide constitué par un produit en solution ou en suspension dans un diluant vaporisable, ce cycle comprenant un ou plusieurs stades d'évaporation successifs réalisés chacun par échange thermique indirect entre une vapeur de chauffage condensable et ledit produit liquide, échange au cours duquel ladite vapeur de chauffage se condense et cède sa chaleur latente de vaporisation audit produit liquide, ce dont il résulte des condensats et un produit liquide concentré, la vapeur produite à au moins un stade d'évaporation, dite vapeur d'évaporation, étant soumise à l'action d'une pompe à chaleur avant d'être utilisée comme vapeur de chauffage pour le stade d'évaporation dont est issue ladite vapeur d'évaporation à soumettre à l'action de ladite pompe à chaleur ou pour un stade d'évaporation précédant celui-ci.

**0133095**

Conformément à l'invention, le niveau thermique des calories prélevées sur le fluide caloporteur et soumises à l'action de la pompe à chaleur mise en oeuvre dans le cycle de concentration est relevé par cette pompe à chaleur et est amené au niveau thermique le plus élevé dudit cycle et ceci en profitant avantageusement de la pompe à chaleur du cycle de concentration. Certes, cette dernière pompe à chaleur devra être plus largement dimensionnée et consommer plus d'énergie que celle normalement nécessaire quand il n'y a pas transfert de calories extérieures dans le cycle de concentration, mais le coût de l'exploitation du procédé selon l'invention reste malgré tout bien inférieur aux procédés existants.

Les pompes à chaleur évoquées ci-dessus et dans la suite de cette description sont en fait constituées par tous dispositifs aptes à relever le niveau thermique des calories soumises à leur action. Il s'agira notamment de pompes à chaleur du type à compression mécanique de vapeur, du type à éjecto-compression, du type à absorption et/ou du type avec fluide intermédiaire.

Le prélèvement des calories à bas niveau thermique sur le fluide caloporteur peut être réalisé de diverses manières.

Selon un premier mode de réalisation de l'invention et lorsque le fluide caloporteur est un liquide caloporteur vaporisable ou un liquide vaporisable auquel ont été cédées les calories d'un gaz caloporteur, ce prélèvement est réalisé en soumettant le fluide caloporteur à une ou plusieurs détentes successives, les calories de la vapeur de détente produite par au moins l'une de ces détentes étant ensuite soumises à l'action de ladite ou desdites pompes à chaleur.

Selon un second mode de réalisation de l'invention, on prélève des calories sur le fluide caloporteur en effectuant un ou plusieurs échanges thermiques successifs entre le fluide caloporteur et un liquide vaporisable de manière à ce qu'au cours de ces échanges le fluide se refroidisse progressivement et le liquide vaporisable se réchauffe progressivement et en soumettant le liquide vaporisable résultant à une ou plusieurs détentes successives, les calories de la vapeur de détente produite par au moins l'une de ces détentes étant ensuite soumises à l'action de ladite ou desdites pompes à chaleur. Il est à noter que le dernier échange thermique peut avantageusement être du type par mélange.

Selon un troisième mode de réalisation de l'invention, on prélève des calories sur le fluide caloporteur en effectuant un ou plusieurs échanges thermiques indirects successifs entre le fluide caloporteur et respectivement un ou plusieurs liquides vaporisables et en soumettant chacun desdits liquides vaporisables résultants à une ou plusieurs détentes successives, les calories de la vapeur de détente produite par au moins l'une de ces détentes étant ensuite soumises à l'action de ladite ou desdites pompes à chaleur.

Dans le but de soumettre les calories de la vapeur de détente produite dans les trois modes de réalisation ci-dessus, à l'action de ladite ou desdites pompes à chaleur, on soumet éventuellement ladite vapeur de détente à l'action d'une pompe à chaleur puis soumet la vapeur résultante à un échange thermique avec un fluide du cycle de concentration. On comprendra que si la vapeur de détente éventuellement soumise à l'action de ladite pompe à chaleur est plus chaude que le fluide du cycle de concentration, les calories de cette vapeur de détente peuvent être transférées audit fluide du cycle de concentration ; en outre, si le fluide est constitué par le produit liquide destiné à être concentré dans le stade d'évaporation dont est issue la vapeur d'évaporation à soumettre à l'action de la pompe à chaleur ou dans un stade d'évaporation précédant celui-ci, les calories en cause se retrouvent à un moment donné dans la vapeur d'évaporation à soumettre à l'action de la pompe à chaleur et sont de ce fait soumises à l'action de la pompe à chaleur du cycle de concentration où elles sont amenées au niveau thermique le plus élevé dudit cycle.

Par ailleurs, quand le liquide caloporteur ou le liquide vaporisable est de même nature que le diluant du produit liquide à concentrer, les calories de la vapeur de détente produite dans les trois modes de réalisation ci-dessus, sont soumises à l'action de ladite ou desdites pompes à chaleur, en soumettant ladite vapeur de détente à l'action d'une pompe à chaleur pour l'amener à la température d'une vapeur de chauffage du cycle de concentration autre que celle constituée par la vapeur d'évaporation qui a été soumise à l'action de la pompe à chaleur dudit cycle, puis en joignant la vapeur résultante à ladite vapeur de chauffage. Ici encore, on comprendra que si ladite vapeur de chauffage est celle destinée à être mise en oeuvre dans le stade d'évaporation dont est issue la vapeur d'évaporation à soumettre à l'action de la pompe à chaleur, ou dans un stade précédant celui-ci, les calories en cause se retrouvent dans la vapeur d'évaporation à soumettre à l'action de la pompe à chaleur du cycle de concentration et sont de ce fait amenées au niveau thermique le plus élevé du cycle de concentration. Il en est de même quand on soumet ladite vapeur de détente à l'action d'une pompe à chaleur pour l'amener à la température de la vapeur d'évaporation à soumettre à l'action de la pompe à chaleur du cycle de concentration puis joint à cette dernière la vapeur de détente résultante.

D'autre part, quand le liquide caloporteur ou le liquide vaporisable est de même nature que le diluant du produit liquide à concentrer, le niveau thermique des calories de la vapeur de détente produite dans les trois modes de réalisation définis précédemment, peut également être relevé uniquement au moyen de la pompe à chaleur du cycle de concentration ; pour ce faire, on réalise l'une des détentes à une pression correspondant à la température de la vapeur d'évaporation à soumettre à l'action de la pompe à chaleur du cycle de concentration, puis on joint la vapeur produite par cette détente à ladite vapeur d'évaporation. Dans ce cas, on pourra avantageusement, soit soumettre à l'action d'une pompe à chaleur la vapeur produite par au moins l'une des autres détentes pour l'amener à la température de la vapeur d'évaporation destinée à être soumise à l'action de la pompe à chaleur du cycle de concentration, puis joindre la vapeur résultante à ladite vapeur d'évaration, soit à soumettre à l'action d'une pompe à chaleur la vapeur de détente produite par au moins une détente suivante pour l'amener à la température de la vapeur de détente produite par l'une des détentes précédentes avant de la joindre à cette dernière vapeur. Dans ce cas, le niveau thermique des calories présentes dans la vapeur de détente produite par au moins une desdites autres détentes, sera relevé en deux ou plusieurs stades jusqu'au niveau thermique le plus élevé du cycle de concentration, c'est-à-dire au niveau thermique de la vapeur issue de la pompe à chaleur dudit cycle.

Selon un quatrième mode de réalisation de l'invention, on prélève des calories sur le fluide caloporteur en soumettant, dans l'évaporateur d'au moins une pompe à chaleur, le fluide caloporteur à un échange thermique indirect avec un gaz intermédiaire auquel sont ainsi transférées les calories dudit fluide caloporteur, le gaz intermédiaire résultant étant ensuite comprimé au moyen du compresseur de la pompe à chaleur pour amener les calories qu'il contient à un niveau thermique permettant leur transfert dans le cycle de concentration où elles sont soumises à l'action de la pompe à chaleur mise en oeuvre dans ce cycle.

Selon un cinquième mode de réalisation de l'invention, on prélève des calories sur le fluide caloporteur en effectuant un ou plusieurs échanges thermiques successifs entre le fluide caloporteur et un liquide intermédiaire pour réchauffer progressivement ce dernier avec refroidissement progressif du fluide caloporteur et en soumettant, dans l'évaporateur d'au moins une pompe à chaleur, le liquide intermédiaire réchauffé résultant à un échange thermique indirect avec un gaz intermédiaire auquel sont ainsi transférées des calories du liquide intermédiaire, le gaz intermédiaire résultant étant ensuite comprimé pour amener les calories qu'il contient à un niveau thermique permettant leur transfert dans le cycle de concentration où elles sont soumises à l'action de la pompe à chaleur mise en oeuvre dans ce cycle.

Dans ces deux derniers modes de réalisation, on réalise le transfert dans le cycle de concentration des calories du gaz intermédiaire comprimé, en soumettant ledit gaz intermédiaire comprimé à un échange thermique indirect avec un fluide moins chaud que ledit gaz et en soumettant à son tour le fluide résultant à un échange thermique indirect avec le produit liquide, moins chaud que ledit fluide, destiné à être concentré dans le stade d'évaporation du cycle de concentration dont est issue la vapeur d'évaporation à soumettre à l'action de la pompe à chaleur dudit cycle ou dans l'un des stades d'évaporation précédant celui-ci. Selon une première variante possible, on réalise le transfert dans le cycle de concentration des calories du gaz intermédiaire comprimé, en soumettant ledit gaz intermédiaire comprimé à un échange thermique indirect avec un liquide vaporisable moins chaud que ledit gaz comprimé et en soumettant le liquide résultant à une détente, la vapeur de détente ainsi produite étant soumise à un échange thermique indirect avec le produit liquide, moins chaud que cette vapeur, destiné à être concentré dans le stade d'évaporation dont est issue la vapeur d'évaporation à soumettre à l'action de la pompe à chaleur du cycle de concentration ou dans l'un des stades d'évaporation précédant celui-ci. Selon une seconde variante, on réalise le transfert dans le cycle de concentration des calories du gaz intermédiaire comprimé, en soumettant ledit gaz intermédiaire comprimé à un échange thermique indirect avec un liquide vaporisable moins chaud que ledit gaz comprimé et en soumettant le liquide résultant à une détente, la vapeur de détente ainsi produite étant mélangée à la vapeur d'évaporation à soumettre à l'action de la pompe à chaleur du cycle de concentration ou à la vapeur de chauffage pour un stade d'évaporation du cycle de concentration autre que celle constituée par la vapeur d'évaporation ayant subi l'action de ladite pompe à chaleur du cycle, ladite détente étant réalisée pour que ladite vapeur de détente ait la même température que ladite vapeur d'évaporation ou ladite vapeur de chauffage ; la vapeur de chauffage sera bien entendu celle destinée à être mise en oeuvre dans le stade d'évaporation dont est issue la vapeur d'évaporation à soumettre à l'action de la pompe à chaleur du cycle de concentration ou dans un stade précédant celui-ci et ce, pour que les calories contenues dans ladite vapeur de détente puissent se retrouver à un moment donné dans la vapeur d'évaporation à soumettre à l'action de la pompe à chaleur du cycle de concentration.

Selon une troisième variante, on réalise le transfert des calories du gaz intermédiaire comprimé, dans le cycle de concentration, en soumettant ledit gaz intermédiaire comprimé à un échange thermique indirect avec le produit liquide, moins chaud que ce gaz comprimé, destiné à être concentré dans le stade d'évaporation dont est issue la vapeur d'évaporation à soumettre à l'action de la pompe à chaleur du cycle de concentration ou dans l'un des stades d'évaporation précédant celui-ci.

Selon un sixième mode de réalisation de l'invention, on prélève les calories sur le fluide caloporteur en procédant comme suit. On soumet le fluide caloporteur à un échange thermique indirect avec un fluide plus froid, on prélève des calories sur le fluide caloporteur résultant en soumettant ce dernier, dans l'évaporateur d'une pompe à chaleur, à un échange thermique indirect avec un gaz intermédiaire qui absorbe les calories du fluide caloporteur, on comprime le gaz intermédiaire dans le compresseur de ladite pompe à chaleur pour amener les calories prélevées sur le fluide caloporteur à un niveau thermique suffisant pour permettre leur transfert dans le cycle de concentration, on soumet ensuite le gaz intermédiaire comprimé à un échange thermique indirect avec le fluide caloporteur pour relever le niveau thermique de ce dernier avant de le soumettre à l'échange thermique avec ledit fluide, le fluide réchauffé au cours de cet échange étant utilisé comme moyen de transfert dans le cycle de concentration des calories prélevées sur le fluide caloporteur.

Avantageusement, ledit fluide est constitué par le produit liquide à concentrer.

On notera ici que dans les quatrième, cinquième et sixième modes de réalisation de l'invention, le compresseur de la ou des pompes à chaleur pourra être du type à compression mécanique ou du type à éjecto-compression.

Selon une autre possibilité conforme à l'invention, on prélève les calories sur le fluide caloporteur puis les soumet à l'action de la ou des pompes à chaleur en transférant les calories du fluide caloporteur uniquement par des opérations de mélange et/ou d'échange thermique, à au moins un fluide du cycle de concentration.

On comprendra aisément que les calories à bas niveau thermique transférées de cette manière au fluide du cycle de concentration, constitué notamment soit par le produit liquide destiné à être concentré dans le stade d'évaporation dont est issue la vapeur d'évaporation à soumettre à l'action de la pompe à chaleur du cycle de concentration ou dans l'un des stades d'évaporation précédents, soit par les condensats produits dans le stade d'évaporation dont est issue la vapeur d'évaporation à soumettre à l'action de ladite pompe à chaleur ou dans l'un des stades d'évaporation précédents, se retrouvent dans la vapeur d'évaporation à soumettre à l'action de ladite pompe à chaleur et sont de ce fait amenées au niveau thermique le plus élevé dudit cycle de concentration lorsque cette vapeur d'évaporation est soumise à l'action de ladite pompe à chaleur.

Ce transfert des calories à bas niveau thermique au(x) fluide(s) du cycle de concentration peut être exécuté de différentes manières.

Il est à noter que dans le cas où l'on transfère des calories du fluide caloporteur au fluide du cycle de concentration, par échange thermique, ce dernier peutêtre réalisé en faisant appel à un fluide intermédiaire.

Ainsi, selon un premier mode d'exécution dudit transfert, dans lequel le fluide caloporteur est un liquide vaporisable à un niveau thermique supérieur à celui de la vapeur d'évaporation à soumettre à l'action de la pompe à chaleur du cycle de concentration, ce fluide est introduit dans une zone d'échange thermique indirect du cycle de concentration, zone où sont produits des condensats et où le niveau thermique est supérieur à celui de la vapeur d'évaporation à soumettre à l'action de ladite pompe à chaleur, mais inférieur à celui du fluide caloporteur.

En variante, on peut réaliser un échange thermique indirect entre le fluide caloporteur et des condensats moins chauds que ledit fluide, au sein de la zone d'échange thermique où sont produits lesdits condensats et où le niveau thermique est supérieur à celui de la vapeur d'évaporation à soumettre à l'action de la pompe à chaleur du cycle de concentration.

Une autre variante encore de ce premier mode d'exécution consiste à extraire des condensats moins chauds que le fluide caloporteur de la zone d'échange thermique où ils sont produits et où le niveau thermique est supérieur à celui de la vapeur d'évaporation à soumettre à l'action de la pompe à chaleur, à en soumettre une partie à un échange thermique indirect avec le fluide caloporteur, puis à ramener dans ladite zone les condensats ayant été soumis à cet échange thermique, le niveau thermique de ces derniers étant supérieur à celui de la vapeur d'évaporation à soumettre à l'action de ladite pompe à chaleur.

Dans ce premier mode d'exécution et ses deux variantes, les calories à bas niveau thermique sont transférées au produit liquide en cours d'évaporation pour se retrouver finalement dans la vapeur d'évaporation à soumettre à l'action de la pompe à chaleur du cycle de concentration.

Selon un second mode d'exécution dudit transfert, on réalise un échange thermique indirect entre le fluide caloporteur et le produit liquide à concentrer moins chaud. Il est à noter qu'avant de subir cet échange thermique, le pro-

duit liquide à concentrer peut être soumis à un échange thermique indirect avec les condensats produits dans l'un au moins des stades d'évaporation. Dans ce cas, il y a transfert direct des calories à bas niveau thermique au produit liquide à concentrer avec réchauffage supplémentaire de ce dernier au moyen des condensats.

Un troisième mode d'exécution dudit transfert consiste à réaliser un premier échange thermique indirect entre le fluide caloporteur et des condensats moins chauds que ce fluide, les condensats résultants étant ensuite soumis à un deuxième échange thermique indirect avec le produit liquide à concentrer.

Avantageusement, avant d'être soumis au premier échange thermique, les condensats sont soumis à un échange thermique indirect avec le produit liquide à concentrer résultant du deuxième échange thermique.

Selon un quatrième mode d'exécution dudit transfert, on mélange le fluide caloporteur et des condensats, puis réalise un échange thermique indirect entre le mélange résultant et le produit liquide à concentrer, le produit liquide à concentrer résultant dudit échange thermique pouvant, si on le désire, être soumis à un échange thermique indirect avec les condensats avant leur mélange avec le fluide caloporteur.

Un cinquième mode d'exécution dudit transfert consiste en ce qu'une fraction du produit liquide à concentrer est soumise à un échange thermique indirect avec le fluide caloporteur, une autre fraction du produit liquide à concentrer est soumise à un échange thermique indirect avec les condensats, les deux fractions résultant de ces échanges étant réunies avant d'être traitées dans le cycle de concentration.

Un sixième mode d'exécution dudit transfert consiste à réaliser un échange thermique indirect entre le produit liquide à concentrer et des condensats plus chauds, à soumettre une fraction des condensats refroidis issus de cet échange, à un échange thermique indirect avec le fluide caloporteur plus chaud, puis àmélanger les condensats ainsi réchauffés à ceux destinés à être soumis à l'échange thermique avec le produit liquide à concentrer.

Il est bien certain que la présente invention s'applique quelque soit la manière dont est réalisée l'évaporation du produit liquide à concentrer.

Ainsi, les différents stades d'évaporation peuvent être agencés pour conduire à un système d'évaporation à simple effet ou à un système d'évaporation à multiple effet ; en outre, chaque stade d'évaporation peutêtre d'un type quelconque, comme par exemple du type à flot tombant. On notera ici que lorsque l'évaporation est du type qui nécessite un appoint de calories pour conserver l'équilibre thermique du système d'évaporation (équilibre entre les calories entrant et sortant du système), ce qui est par exemple le cas de l'évaporation du type à compression mécanique de vapeur, il est possible, grâce à l'invention, de réaliser économiquement cet appoint avec tout ou partie des calories prélevées sur le liquide caloporteur.

Le fluide caloporteur mis en oeuvre dans le procédé selon l'invention sera avantageusement constitué par tout fluide produit au cours de l'évaporation du produit liquide à concentrer, et notamment tout ou partie des condensats et/ou du produit liquide concentré.

Par ailleurs, quand le cycle de concentration comporte plusieurs stades d'évaporation, ces derniers étant réalisés respectivement dans des chambres d'évaporation associées chacune à un corps de chauffe alimenté en vapeur de chauffage avec extraction en continu des incondensables d'au moins un corps de chauffe sous la forme d'unmélange d'incondensables et de vapeur de chauffage, le fluide caloporteur selon l'invention pourra avantageusement être constitué par le mélange incondensables-vapeur de chauffage extrait d'un corps de chauffe qui n'est pas au niveau thermique le plus élevé du cycle de concentration

Dans le procédé qui vient d'être décrit, les calories à bas niveau thermique transférées dans le cycle de concentration peuvent, selon les disponibilités en calories du cycle, soit totalementparticiper à la concentration du produit liquide à concentrer, soit ne participer que partiellement ou même ne pas participer du tout à la concentration. Dans la deuxième hypothèse, le cycle de concentration est excédentaire en calories et il est alors possible d'utiliser avantageusement cet excédent pour chauffer un fluide. Ainsi, la présente inventionconcerne en outre un procédé de chauffage qui se caractérise en ce qu'il consiste à transférer à ce fluide des calories prélevées sur le cycle de concentration mis en oeuvre dans le procédé décrit ci-dessus. Ce prélèvement et ce transfert seront avantageusement obtenus en réalisant un échange thermique entre ledit fluide à chauffer et un fluide du cycle de concentration. Bien entendu, ce fluide sera de préférence celui dont le niveau thermique est le plus élevé et il s'agira en particulier de la vapeur d'évaporation ayant subi l'action de la pompe à chaleur du cycle de concentration, vapeur qui peut, si on le désire, être soumise à l'action d'une pompe à chaleur supplémentaire avant d'être utilisée pour le chauffage du fluide. Le fluide à chauffer pourra par exemple être constitué par de l'eau.

Par ailleurs, il est fréquent, notamment dans l'industrie laitière, de trouver à proximité l'une de l'autre, d'une part, une installation dans laquelle est mis en oeuvre un cycle de concentration du type de celui décrit ci-dessus et d'autre part, une installation de séchage faisant appel à un gaz chaud de séchage. Dans ces conditions, le fluide à chauffer sera avantageusement constitué par le gaz destiné à être utilisé comme gaz de séchage dans le cycle de séchage d'un produit à sécher mis en oeuvre dans ladite installation de séchage.

Le cycle de séchage comprendra notamment le préchauffage d'un gaz de séchage au moyen des calories prélevées sur le cycle de concentration, le chauffage dans un réchauffeur du gaz ainsi préchauffé, jusqu'à la température finale requise pour le séchage, l'échange thermique indirect entre le gaz résultant et le produit concentré issu ducycle de concentration ou tout autre produit à sécher pour obtenir un produit séché et un fluide gazeux comprenant ledit gaz de séchage et la vapeur de diluant provenant du produit à sécher et la séparation de ce fluide gazeux du produit séché. Selon une caractéristique de l'invention, ledit fluide gazeux, les gaz chauds éventuellement créés dans le réchauffeur et/ou un liquide auquel ont préalablement été transférés les calories du fluide gazeux et/ou desdits gaz chauds sont utilisés en tant que fluide caloporteur sur lequel on réalise ensuite les différentes opérations décrites précédemment.

Cette caractéristique est particulièrement intéressante puisqu'elle permet de réaliser une opération de concentration et de séchage avec un rejet minimum de calories et, partant, avec une consommation minimum d'énergie.

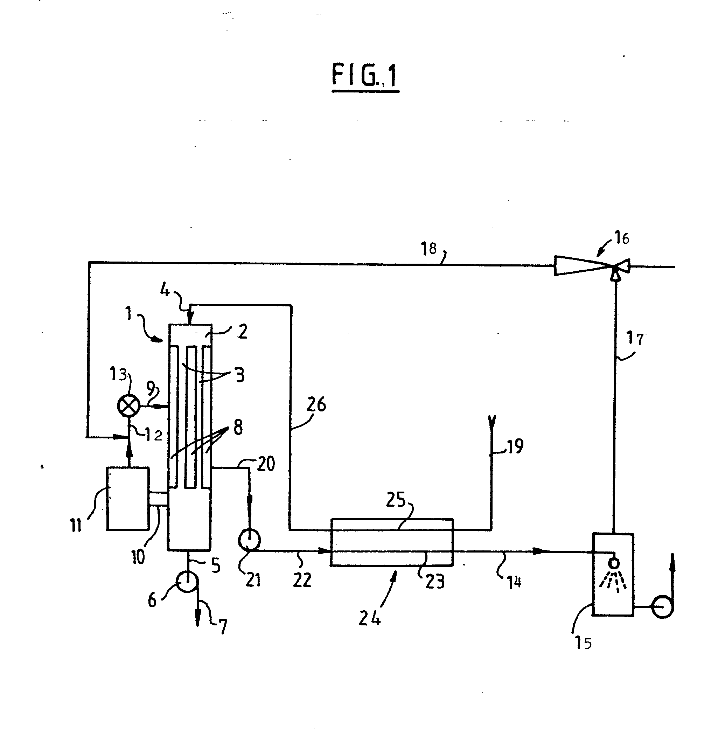

Plusieurs modes de réalisation de l'invention sont illustrés ci-après avec référence aux dessins annexés comportant les figures 1 à 21.

L'installation de la figure 1 comporte un évaporateur 1 constitué par au moins un corps d'évaporation 2 comportant de manière connue en soi une chambre d'évaporation 3 pourvue d'une arrivée 4 de produit liquide à concentrer et d'un moyen d'extraction comprenant une sortie 5 de produit liquide concentré relié à l'aspiration d'une pompe 6 dont le refoulement est référencé 7. L'évaporateur peut être d'un type quelconque, par exemple du type à flot tombant comme cela est représenté sur la figure 1, auquel cas la chambre d'évaporation 3 est constituée par un faisceau tubulaire disposé dans un corps de chauffe 8 pourvu d'une arrivée 9 de vapeur de chauffage.

La vapeur de chauffage amenée dans le corps de chauffe 8 par l'arrivée 9 se condense en cédant ses calories au produit liquide à concentrer (par exemple à 50° C) amené dans la chambre d'évaporation 3 par l'arrivée 4. Ce produit liquide subit de ce fait une concentration par évaporation, la vapeur produite par cette évaporation dite vapeur d'évaporation étant évacuée de la chambre d'évaporation via le conduit 10 et le séparateur vapeur-liquide 11. Quant au produit liquide concentré, il est extrait à la base du corps d'évaporation par le moyen d'extraction 5, 6, 7.

Par ailleurs, le séparateur 11 est relié par un conduit 12 à l'aspiration d'un compresseur 13 (par exemple du type compresseur mécanique) dont le refoulement est relié à l'arrivée 9.

Conformément à l'invention, on prélève les calories sur un liquide caloporteur arrivant par un conduit 14 et qui est par exemple à une température de 48° C. Les calories ainsi prélevées sont ensuite transférées dans le cycle de concentration de manière à ce qu'elles soient soumises à l'action du compresseur 13. Ceci est plus précisément réalisé en reliant le conduit 14 à un ballon de détente 15 relié à un éjecto-compresseur 16. Le liquide caloporteur arrivant par 14 se détend dans le ballon 15 en libérant de la vapeur de détente qui est amenée dans le compresseur 16 en reliant ledit ballon 15 à l'aspiration 17 dudit compresseur 16. Cette vapeur de détente est ensuite comprimée dans ce dernier pour être amenée à la température (au moins 55° C dans l'exemple choisi) de la vapeur s'échappant du séparateur 11 avant d'être mélangée à cette dernière, ce qui est réalisé en reliant le refoulement 18 du compresseur 16 audit conduit 12.

Bien entendu, quand le liquide caloporteur est à une température supérieure à celle du produit liquide à concentrer, on peut le soumettre, avant sa détente, à un échange thermique avec ledit produit liquide. Ceci est illustré par la figure 1 où le produit liquide à concentrer disponible amené dans l'installation par le conduit 19 est à une température de 45° C et où le liquide caloporteur, constitué notamment par les condensats issus du corps de chauffe 8, est à une température de 60° C. Dans ce cas, les condensats sont soutirés du corps de chauffe 8 par le conduit 20 et la pompe 21 dont le refoulement 22 est relié à l'entrée de l'un des circuits 23 d'un échangeur thermique à surface 24, la sortie de ce circuit 23 étant raccordée au conduit 14. Par ailleurs, le conduit 19 est relié à l'entrée du second conduit 25 dudit échangeur 24, la sortie de ce circuit 25 étant reliée par un conduit 26 à l'arrivée 4. L'échange thermique réalisé au sein de l'échangeur 24 élève la température du liquide à concentrer à 55° C et abaisse la température des condensats à 48° C.

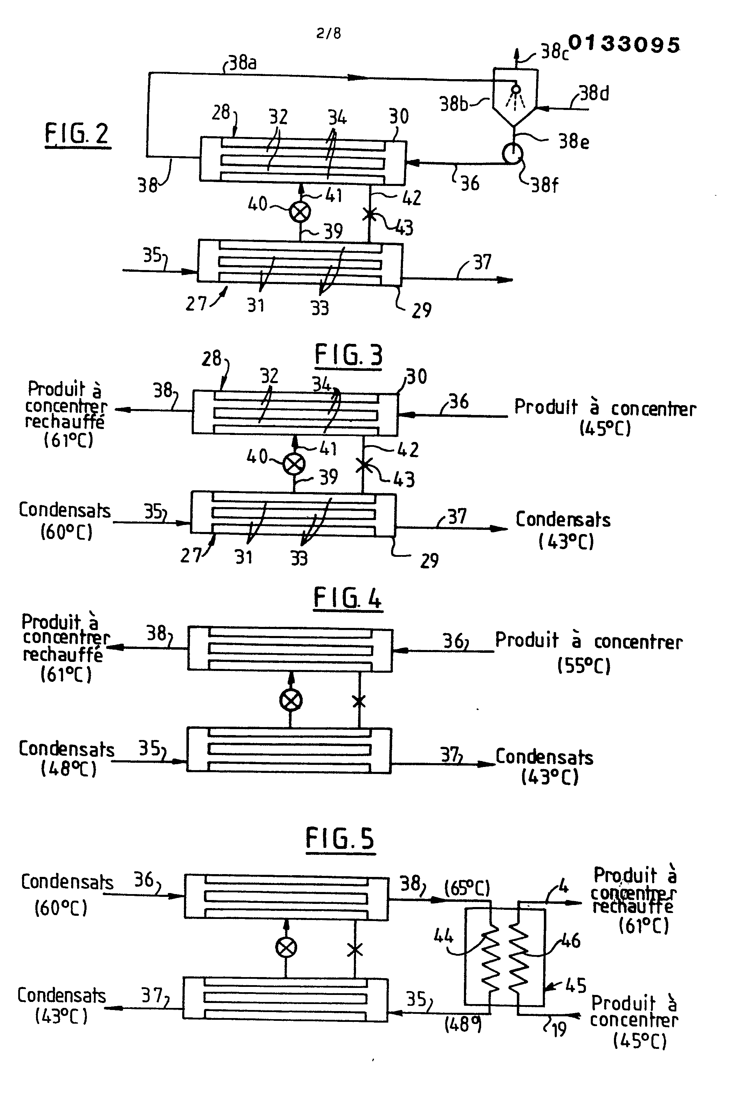

Les figures 2 à 5 montrent comment, à l'aide d'une pompe à chaleur classique, il est possible de prélever des calories sur un liquide caloporteur et de les transférer dans le cycle de concentration décrit ci-dessus pour qu'ils y soient soumis à l'action du compresseur 13.

La pompe à chaleur représentée par la figure 2 s'utilise dans l'installation représentée par la figure 1 dans laquelle on a supprimé le ballon de détente 15, le compresseur 16, les conduits 17 et 18 et éventuellement l'échangeur 24. Cette pompe à chaleur comprend de manière connue en soi, un évaporateur 27 et un condenseur 28 constitués respectivement par exemple par un corps d'évaporation horizontal 29 et un corps de condensation 30 traversés longitudinalement respectivement par un faisceau tubulaire 31, 32 disposés dans une enceinte 33, 34, les faisceaux tubulaires 31, 32 étant pourvus chacun d'une arrivée 35, 36 et d'une sortie 37, 38. La partie supérieure de l'enceinte 33 est par ailleurs reliée par un conduit 39 à l'aspiration d'un compresseur 40 (de préférence mécanique) dont le refoulement est relié par un conduit 41 à l'enceinte 34. La partie basse de cette dernière est en outre reliée à l'enceinte 33 par un conduit 42 pourvu d'un détendeur 43.

Enfin, l'arrivée 35 est reliée à la sortie du circuit 23 de l'échangeur 24 ou, lorsque cet échangeur est supprimé, au refoulement 22 de la pompe 21. La sortie 38 est reliée par un conduit 38a à un ballon de détente 38b pourvu d'une sortie 38c de vapeur de détente à sa partie haute, d'une arrivée 38d d'eau et d'une sortie 38e à sa partie basse, reliée à l'aspiration d'une pompe 38f dont le refoulement est connecté à l'arrivée 36. L'ensemble 28-38-38a-38b-38e-38f-36 forme ainsi un circuit fermé dans lequel circule de l'eau.

Les condensats (à 48° C par exemple) pénétrant dans le faisceau tubulaire 31 par l'arrivée 35 sont soumis dans ce faisceau à un échange thermique avec un gaz intermédiaire plus froid contenu dans l'enceinte 33 et qui absorbe les calories des condensats. Le gaz intermédiaire est ensuite aspiré par le compresseur 40 puis comprimé par ce dernier pour l'amener à un niveau thermique suffisant pourpermettre le transfert des calories qu'il contient dans le cycle de concentration, le gaz intermédiaire pouvant avantageusement être choisi (fluide frigorigène par exemple) pour que sa pression de condensation corresponde à ce niveau thermique. Le gaz intermédiaire éventuellement liquéfié ainsi produit cède ensuite sa chaleur latente de vaporisation à l'eau (par exemple à 55° C) par échange thermique dans le condenseur 28, eau dont la température est amenée par exemple à 60° C au cours de cet échange. Le gaz intermédiaire éventuellement liquéfié retourne ensuite par le conduit 42 dans l'enceinte 33 en subissant une détente grâce au détendeur 43, notamment une détente de sa pression de condensation à sa pression d'évaporation. L'eau chaude produite est ensuite amenée dans le ballon de détente 38b où elle subit une détente avant d'être recyclée vers le faisceau tubulaire 32. La vapeur produite par cette détente s'échappe par la sortie 38c et on transfère ses calories dans le cycle de concentration, par exemple en la soumettant à un échange thermique indirect avec le produit liquide à concentrer ou en la mélangeant à la vapeur de chauffage, notamment à l'aspiration du compresseur 13. Bien entendu, pour que ce transfert soit possible, il faudra choisir le compresseur 40 et/ou réaliser la détente dans le ballon 38b pour que la vapeur de détente issue de ce dernier soit plus chaude que ledit produit liquide à concentrer (dans le cas de l'échange thermique indirect avec ce dernier) ou ait une température au moins égale à celle de la vapeur de chauffage (dans le cas du mélange avec cette dernière). Le circuit fermé défini ci-dessus pourrait être remplacé par un circuit ouvert ; en outre, on pourrait en variante supprimer le ballon de détente 38b et se servir directement de l'eau réchauffée issue du condenseur 28 comme moyen de transfert de calories vers le cycle de concentration, par exemple en la soumettant à un échange thermique avec le produit liquide à concentrer. Le liquide mis en oeuvre dans le circuit fermé évoqué précédemment peut par ailleurs être constitué par le produit liquide à concentrer lui-même. C'est ce qui est illustré par la figure 3 où les arrivées 35, 36 sont raccordées respectivement au refoulement 22 de la pompe 21 et au conduit 19 de l'installation de la figure 1, l'échangeur 24 ayant été supprimé, et la sortie 38 est reliée à l'arrivée 4 de l'installation de la figure 1.

La pompe à chaleur illustrée par la figure 4 est en tous points identique à celle représentée par la figure 3. Toutefois, les arrivées 35 et 36 sont raccordées respectivement à la sortie du circuit 23 de l'échangeur 24 et à la sortie du circuit 25 de l'échangeur 24 de l'installation de la figure 1 et la sortie 38 est reliée à l'arrivée 4 de l'installation de la figure 1. Le mode de réalisation illustré par cette figure 4 diffère donc du mode de réalisation illustré par la figure 3 en ce qu'avant son échange thermique avec le gaz intermédiaire, les condensats, plus chauds (60° C par exemple) que le produit liquide à concentrer (45° C par exemple), sont soumis dans l'échangeur 24 à un échange thermique indirect avec ledit produit liquide au cours duquel la température de ce dernier est portée à 55° C dans l'exemple choisi, les condensats étant refroidis à 48° C.

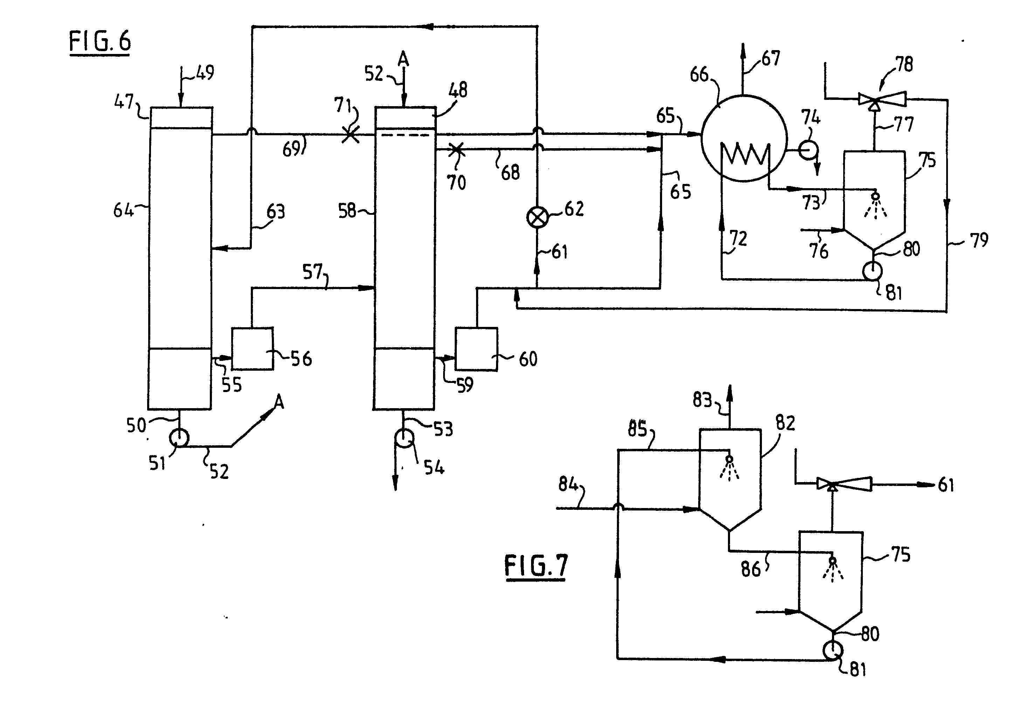

La pompe à chaleur représentée par la figure 5 est elle également en tous points identique à celle représentée par la figure 3. Toutefois, l'arrivée 35 et la sortie 38 sont reliées respectivement à la sortie et à l'entrée de l'un des circuits 44 d'un échangeur thermique à surface 45, l'entrée et la sortie de l'autre circuit 46 de cet échangeur 45 étant raccordées respectivement au conduit 19 et à l'arrivée 4 de l'installation de la figure 1 de laquelle ont été supprimés l'échangeur 24, les conduits 14, 17, 18, 22 et 26, le ballon de détente 15 et le compresseur 16. Par ailleurs, l'arrivée 36 du condenseur 28 est reliée au refoulement de la pompe 21.

Les condensats (à 60° C) amenés dans le condenseur 28 sont portés dans ce dernier à une température suffisante (par exemple 65° C), pour que les calories qu'ils contiennent puissent être transférées dans le cycle d'évaporation, après quoi ils cèdent une partie de leurs calories, dans l'échangeur 45, au produit liquide à concentrer dont la température se trouve ainsi portée de 45° C par exemple à 61° C par exemple. Les condensats refroidis issus de cet échange sont ensuite amenés dans le faisceau tubulaire de l'évaporateur 27 où ils cèdent des calories au gaz intermédiaire qui sont ensuite transférées dans le condenseur 28 aux condensats à 60° C évoqués ci-dessus. On notera que ce n'est pas nécessairement le produit liquide à concentrer qui circule dans le circuit 46 de l'échangeur 45. En effet, l'installation représentée par la figure 5 pourrait être modifiée en insérant le circuit 46 dans un ensemble du même type que celui illustré par la figure 2 et défini par les références 38a-38b-38e-38f, le conduit 38a et le refoulement de la pompe 38f étant respectivement connectés à la sortie et à l'entrée du circuit 46.

Dans l'installation de la figure 6, l'évaporation du produit liquide est réalisée en deux étapes dans un évaporateur comprenant deux corps d'évaporation 47, 48 qui peuvent par exemple être du type à flot tombant et donc être de conception et de fonctionnement identiques à ceux du corps d'évaporation 2 décrit précédemment. Le produit liquide à concentrer est amené dans la chambre d'évaporation (faisceau tubulaire non représenté) du corps d'évaporation 47 par l'arrivée 49 puis est extrait à la base de ce dernier par le conduit 50 et la pompe 51 avant d'être amené par le conduit 52 dans la chambre d'évaporation (faisceau tubulaire non représenté) du corps d'évaporation 48. Le produit liquide concentré est finalement extrait à la base du corps 48 par le conduit 53 et la pompe 54.

Sur la figure 6, les deux corps 47, 48 sont en position de double effet, la vapeur produite par l'évaporation dans le corps 47 servant de vapeur de chauffage pour le corps 48. Plus précisément, la vapeur produite par l'évaporation dans le corps 47 est amenée par le conduit 55, le séparateur vapeur-liquide 56 et le conduit 57 dans le corps de chauffe 58 du corps d'évaporation 48. Quant à la vapeur créée par l'évaporation dans ce dernier, elle est amenée via le conduit 59, le séparateur 60 et le conduit 61 à l'aspiration d'un compresseur 62, notamment un compresseur mécanique qui comprime puis refoule la vapeur comprimée, par le conduit 63 dans le corps de chauffe 64 du corps d'évaporation 47. Le conduit 61 porte par ailleurs une dérivation 65 reliée à un condenseur par surface 66 relié par un conduit 67 à l'atmosphère ou à une source de vide (non représentée). Quant aux corps de chauffe 58, 64, ils sont pourvus respectivement à leur partie haute d'une tubulure 68, 69 débouchant dans le conduit 65 et munie d'un diaphragme 70, 71 permettant d'effectuer le dégazage des corps de chauffe 64 et 58.

Ainsi, la vapeur créée par l'évaporation dans le corps 48 et éventuellement non aspirée par le compresseur 62 ainsi que les mélanges incondensables - vapeur de chauffage évacués respectivement des corps de chauffe 58 et 64 par les tubulures 68 et 69, sont amenés dans le condenseur 66 où ils cèdent leurs calories, par échange thermique indirect, à un liquide plus froid (eau par exemple) amené dans le condenseur 66 par l'arrivée 72 et évacué de ce dernier par le conduit 73. Les incondensables sont éliminés par le conduit 67 et les condensats résultant de la condensation de la vapeur sont progressivement évacués du condenseur 66 par un moyen d'extraction approprié 74. Le liquide réchauffé évacué du condenseur 66 par le conduit 73 est ensuite utilisé comme liquide caloporteur selon l'invention. Il peut ainsi être amené dans un ballon de détente 75 pourvu d'une arrivée 76 pour un éventuel apport du liquide froid. La vapeur produite par la détente est ensuite amenée par un conduit 77 à l'aspiration d'un compresseur 78, par exemple un éjecto-compresseur; compresseur duquel il ressort une vapeur ayant la température de la vapeur d'évaporation produite dans le corps d'évaporation 48 et qui est mélangée à cette vapeur d'évaporation en reliant le refoulement du compresseur 78 par un conduit 79 au conduit 61. Le liquide détendu est ensuite ramené dans le condenseur à partir de la base du ballon 75 au moyen d'un conduit 80 relié à l'aspiration d'une pompe 81 dont le refoulement est raccordé au conduit 72.

Comme le montre la figure 7, le condenseur 66 pourrait être remplacé par un condenseur par mélange 82 pourvu d'une sortie 83 des incondensables, d'une arrivée 84 reliée à l'extrémité libre du conduit 65, d'une arrivée 85 de liquide plus froid que le mélange incondensables - vapeur de chauffage et d'une sortie 86 de liquide débouchant dans le ballon de détente 75 où ce liquide subit le même sort que dans le ballon 75 de l'installation de la figure 6, le refoulement de la pompe 81 étant raccordé à l'arrivée 85.

Une variante évidente des installations des figures 6 et 7 consisterait à utiliser en circuit ouvert le liquide plus froid que le mélange incondensables - vapeur de chauffage.

Différentes modifications pourraient par ailleurs être apportées aux installations décrites ci-dessus. Ainsi, dans l'installation de la figure 1, on pourrait détendre le produit liquide concentré en lieu et place des condensats ; on pourrait détendre à la fois les condensats et le produit liquide concentré, soit à la même pression, auquel cas les vapeurs de détente produites seraient mélangées avant d'être comprimées dans un compresseur unique, soit à des pressions différentes, auquel cas la vapeur de détente la moins chaude serait d'abord comprimée pour être amenée à la même température que l'autre vapeur de détente, cette dernière et la vapeur de détente comprimée étant ensuite mélangées avant d'être comprimées jusqu'à la température finale désirée ; on pourrait remplacer l'éjecto-compresseur 16 par un compresseur mécanique. D'autre part, l'évaporation du produit liquide à concentrer pourrait être réalisée en plusieurs étapes, auquel cas l'évaporateur 1 des installations des figures 1 à 5 serait constitué par plusieurs corps d'évaporation disposés de préférence pour former un évaporateur à multiple effet par exemple comme illustré par la figure 6.

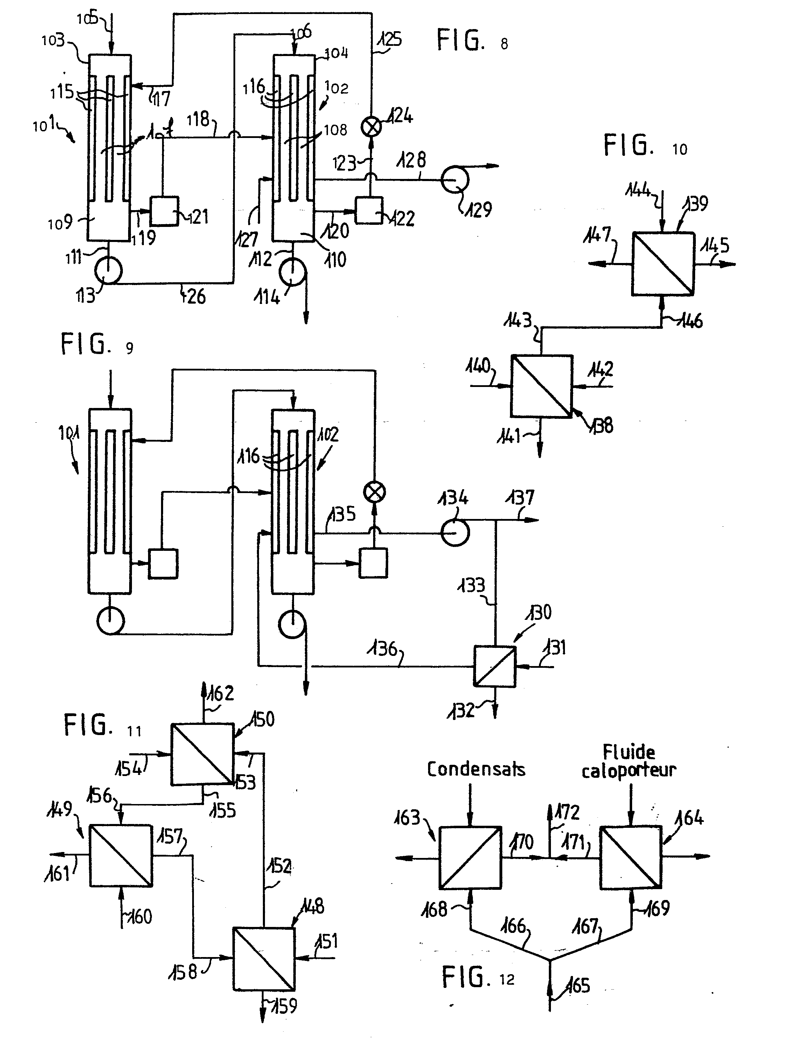

L'installation représentée par la figure 8 comprend de manière connue en soi un évaporateur à multiple effet, par exemple à double effet, dans lequel un produit liquide à concentrer tel que du lait par exemple, est évaporé en deux stades successifs. Plus précisément, cet évaporateur comprend deux effets 101, 102, constitués chacun par une chambre d'alimentation 103, 104 munie d'une arrivée 105, 106 de produit à concentrer, cette chambre étant disposée au-dessus et communiquant avec un faisceau tubulaire 107, 108 vertical lui-même disposé au-dessus et communiquant avec une chambre d'extraction 109, 110 munie à sa base d'un conduit d'extraction 111, 112 relié à l'aspiration d'une pompe d'extraction 113, 114. Le faisceau tubulaire 107, 108 est disposé dans un corps de chauffe 115, 116 muni d'une arrivée 117, 118 de vapeur de chauffage. Par ailleurs, la chambre d'extraction 109, 110 est pourvue à sa partie haute d'un conduit de vapeur 119, 120 débouchant dans un séparateur vapeur-liquide 121, 122, le séparateur 121 associé à l'effet 101 communiquant par sa partie supérieure avec l'arrivée 118 de vapeur et le séparateur 122 communiquant par sa partie supérieure et via un conduit 123 avec l'aspiration d'un compresseur mécanique 124 dont le refoulement est relié par un conduit 125 à l'arrivée 117 de vapeur.

Le produit liquide à concentrer pénètre par l'arrivée 105 dans la chambre d'alimentation 103 de l'effet 101, s'écoule par ruissellement dans le faisceau tubulaire 107 où il subit une première évaporation (premier stade d'évaporation) et se rassemble dans le fond de la chambre d'extraction 109 de laquelle il est extrait au moyen du conduit 111 et de la pompe 113 puis envoyé via le conduit 126 raccordé à l'arrivée 106, dans la chambre d'alimentation 104 du deuxième effet 102. Le produit liquide subit une nouvelle évaporation (deuxième stade d'évaporation) dans l'effet 102 avant d'en être extrait par le conduit 112 et la pompe 114. La vapeur créée par l'évaporation dans l'effet 101 est amenée via le conduit de vapeur 119, le séparateur 121 et l'arrivée 118 dans le corps de chauffe 116 de l'effet 102 où elle est soumise à un échange thermique indirect avec le produit ruisselant dans les tubes du faisceau tubulaire 108, produit auquel elle cède sa chaleur latente de vaporisation en se condensant pour former des condensats, le transfert de cette chaleur latente provoquant l'évaporation partielle du produit liquide à concentrer. La vapeur produite par l'évaporation dans l'effet 102 est quant à elle aspirée, via le conduit 120, le séparateur 122 et le conduit 123, par le compresseur 124 où elle est comprimée jusqu'à une pression correspondant à la température régnant dans le corps de chauffe 115 avant d'être amenée dans ce dernier par le conduit 125 et l'arrivée 117. La vapeur ainsi comprimée est soumise à un échange thermique indirect avec le produit liquide ruisselant dans les tubes du faisceau tubulaire 107, produit auquel elle cède sa chaleur latente de vaporisation en se condensant pour donner des condensats.

Conformément à l'invention, les calories à bas niveau thermique présentes dans un fluide caloporteur disponible, sont transférées à au moins un fluide du cycle de concentration mis en oeuvre dans l'installation décrite ci-dessus, cycle qui comprend essentiellement les deux stades d'évaporation successifs réalisés dans les effets 101, 102, et la compression réalisée dans le compresseur 124.

Ce transfert de calories peutêtre réalisé en amenant ledit fluide caloporteur dans un corps de chauffe où le niveau thermique est supérieur à celui de la vapeur d'évaporation à comprimer. Bien entendu, dans ce cas, le fluide caloporteur devra être un liquide vaporisable ayant un niveau thermique supérieur à celui du corps de chauffe où il est introduit et le fluide caloporteur sera avantageusement de même nature que les condensats. En outre, le niveau thermique dudit fluide caloporteur devra être supérieur à celui de la vapeur d'évaporation à comprimer.

La figure 8 montre plus précisément que le fluide caloporteur est amené par un conduit 127 dans le corps de chauffe 116 de l'effet 102 où il se détend en produisant de la vapeur qui cède ses calories au produit liquide à concentrer ; ces calories se retrouvent dans la vapeur d'évaporation qui est amenée via le conduit 120, le séparateur 122 et le conduit 123 dans le compresseur 124 qui relève ainsi le niveau thermique desdites calories. Le mélange condensats/fluide caloporteur est ensuite extrait du corps de chauffe 116 par un conduit 128 et une pompe d'extraction 129.

Il est bien certain que l'invention n'est pas limitée au cycle de concentration décrit ci-dessus. En fait, entre dans la portée de l'invention, tout cycle de concentration mis en œuvre dans une installation à simple ou multiple effet et à compression de vapeur.

La figure 9 illustre une autre manière de réaliser le transfert des calories à bas niveau thermique du fluide caloporteur (liquide ou gazeux) à un fluide du cycle de concentration. Cette illustration a été faite sur l'installation d'évaporation objet de la figure 8, mais représentée de manière plus schématique ; elle aurait pu toutefois être faite sur n'importe quelle installation d'évaporation à compression de vapeur.

Les moyens permettant ledit transfert sont constitués par un échangeur de chaleur par surface 130 comportant un premier circuit disposé entre une arrivée 131 de fluide caloporteur et une sortie 132 de fluide caloporteur moins chaud et un deuxième circuit disposé entre d'une part une arrivée 133 de condensats communiquant avec le refoulement d'une pompe de reprise 134 dont l'aspiration communique par le conduit 135 avec la base du corps de chauffe 116 et d'autre part une sortie 136 de condensats réchauffés aboutissant également à la base du corps de chauffe 116. Une dérivation 137 est en outre prévue entre la pompe 134 et l'échangeur 130 pour évacuer en continu une quantité de condensats correspondant à celle qui s'est formée dans le corps de chauffe 116. On comprendra que ce type de transfert ne pourra être mis en oeuvre qu'avec des condensats moins chauds que le fluide caloporteur. En outre, les condensats réchauffés issus de l'échangeur 130 devront être à un niveau thermique tel qu'ils subissent une détente en pénétrant dans le corps de chauffe 116, la vapeur de détente ainsi produite cédant ses calories au produit liquide à concentrer. Comme dans le cas de la figure 8, les calories du fluide caloporteur sont donc transférées au produit liquide à concentrer ruisselant dans le faisceau tubulaire de l'effet 102 pour se retrouver finalement dans la vapeur d'évaporation à comprimer dans le compresseur 124 qui relève leur niveau thermique.

Comme le montre la figure 10, le transfert des calories du fluide caloporteur dans le cycle de concentration peut également être réalisé dans un ensemble comprenant deux échangeurs de chaleur par surface 138, 139. L'échangeur 138 comprend un premier circuit compris entre une entrée 140 et une sortie 141 et un second circuit compris entre une entrée 142 et une sortie 143 et l'échangeur 139 comprend un premier circuit compris entre une entrée 144 et une sortie 145 et un second circuit compris entre une entrée 146 et une sortie 147. Le second circuit de l'échangeur 138 est alimenté par l'entrée 142 en produit liquide destiné à être concentré dans une installation d'évaporation à compression de vapeur et plus précisément dans le stade d'évaporation dont est issue la vapeur d'évaporation à comprimer ou dans l'un quelconque des stades d'évaporation précédents., produit liquide qui est réchauffé dans l'échangeur 138 par des condensats (prélevés sur le cycle de concentration de l'installation d'évaporation à compression de vapeur) et pénètrant dans ledit échangeur par l'entrée 140. La sortie 143 est reliée à l'entrée 146 de telle sorte que le produit liquide réchauffé dans l'échangeur 138 est amené dans l'échangeur 139 où lui sont transférées les calories d'un fluide caloporteur introduit dans ledit échangeur 139 par l'entrée 144, avant d'être soumis à un ou plusieurs stades d'évaporation. Ainsi, si l'installation d'évaporation à compression de vapeur est constituée par celle objet de la figure 8, le produit liquide réchauffé dans les échangeurs 138 et 139 peut notamment être celui destiné à être traité dans l'effet 101, la sortie 147 étant alors reliée à l'arrivée en produit liquide dont est pourvue la chambre d'alimentation 103.

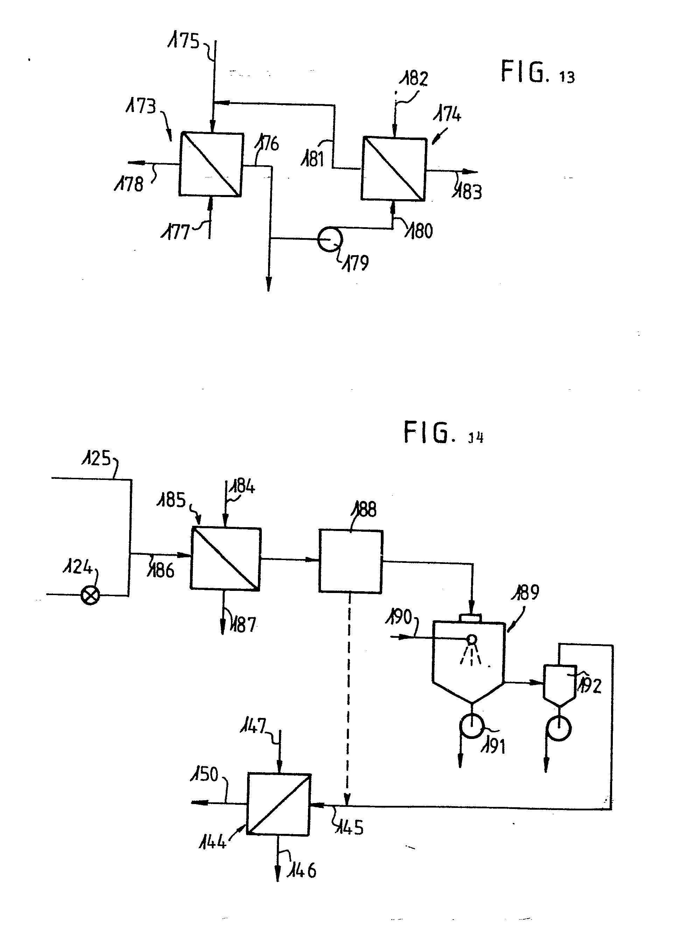

La figure 11 représente un ensemble d'échange thermique indirect comportant trois échangeurs de chaleur par surface 148, 149, 150. Un produit liquide à concentrer est amené par l'entrée 151 dans le premier circuit de l'échangeur 148, puis de la sortie 152 de ce premier circuit à l'entrée 153 du premier circuit de l'échangeur 150. Par ailleurs, des condensats prélevés sur une installation d'évaporation à compression de vapeur par exemple du type de celle objet de la figure 8, sont,amenés par l'entrée 154 dans le second circuit de l'échangeur 150, puis de la sortie 155 de ce second circuit à l'entrée 156 du premier circuit de l'échangeur 149 et enfin de la sortie 157 de ce premier circuit à l'entrée 158 du second circuit de l'échangeur 148 d'où ils sont évacués par la sortie 159. Quant à l'entrée 160 du second circuit de l'échangeur 149, elle est alimentée en fluide caloporteur qui, après avoir traversé ce second circuit, en est évacué par la sortie 161. Ainsi, au produit liquide à concentrer sont transférées à la fois des calories des condensats et du fluide caloporteur. Le produit liquide réchauffé évacué du premier circuit de l'échangeur 150 par la sortie 162 est ensuite soumis à évaporation dans l'installation d'évaporation à compression de vapeur (par exemple dans l'effet 101 dans le cas de l'installation de la figure 8).

Il est à noter qu'en variante, il est possible de supprimer l'échangeur 149, de relier par un conduit la sortie 155 à l'entrée 158 et d'introduire dans ce conduit le fluide caloporteur, le mélange résultant étant ensuite soumis à un échange thermique avec le produit liquide dans l'échangeur 148.

Le produit liquide à concentrer peut également être partagé en deux fractions, l'une des fractions étant soumise à un échange thermique indirect avec les condensats produits dans une installation d'évaporation à compression de vapeur, l'autre fraction étant soumise à un échange thermique indirect avec un fluide caloporteur, les deux fractions étant ensuite à nouveau réunies avant d'être traitées dans ladite installation d'évaporation. C'est ce que montre la figure 12 qui représente un ensemble comprenant deux échangeurs de chaleur par surface 163, 164. Une arrivée 165 de produit liquide à concentrer est prolongée par deux conduits 166, 167, l'un 166 relié à l'entrée 168 du premier circuit de l'échangeur 163, l'autre 167 relié à l'entrée 169 du premier circuit de l'échangeur 164, les sorties 170 et 171 des premiers circuits des échangeurs 163 et 164 débouchant toutes deux dans un conduit 172 amenant le produit liquide dans l'installation d'évaporation. Le second circuit de l'échangeur 163 est quant à lui traversé par des condensats provenant de ladite installation, le second circuit de l'échangeur 164 étant pour sa part traversé par le fluide caloporteur.

La figure 13 illustre le cas où l'échange thermique entre le fluide caloporteur et le produit liquide à concentrer est réalisé au moyen d'un fluide de transfert intermédiaire. L'ensemble représenté par cette figure 13 comprend plus précisément deux échangeurs de chaleur par surface 173, 174. Les condensats prélevés sur le cycle de concentration sont amenés par l'entrée 175 dans le premier circuit de l'échangeur 173 et ils sont évacués de ce premier circuit par la sortie 176. Le second circuit de l'échangeur 173 est quant à lui compris entre une entrée 177 alimentée en produit liquide à concentrer dans le cycle de concentration et une sortie 178 de produit liquide réchauffé destiné à être traité dans ledit cycle de concentration. Une fraction des condensats refroidis issus de la sortie 176 est prélevée par une pompe 179 puis amenée à l'entrée 180 du premier circuit de l'échangeur 174, la sortie 181 de ce circuit étant reliée à l'entrée 175. Quant au second circuit de l'échangeur 174, il est alimenté en fluide caloporteur par l'entrée 182, fluide qui après avoir cédé ses calories aux condensats refroidis issus de l'échangeur 173, est évacué de ce second circuit par la sortie 183. Au produit liquide à concentrer sont ainsi transférées à la fois les calories des condensats et du fluide caloporteur.

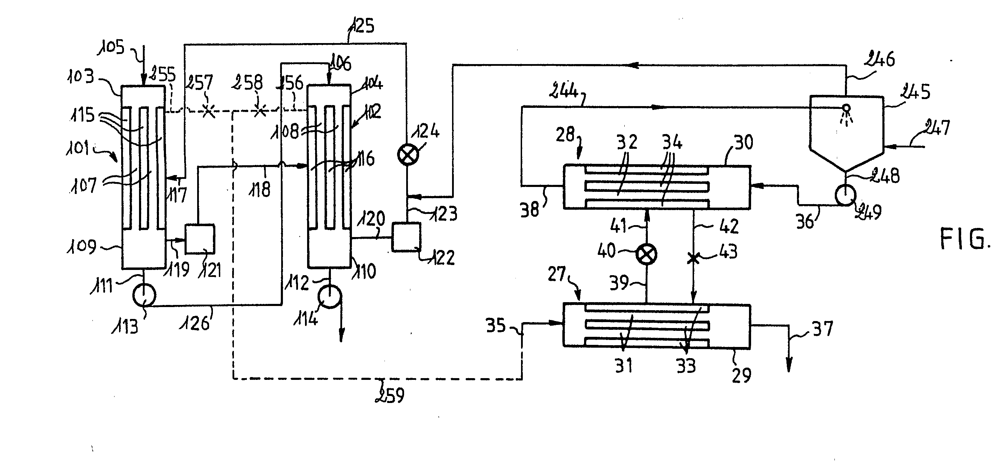

Quand par suite du transfert de calories d'un fluide caloporteur dans une installation d'évaporation à compression de vapeur, cette installation devient excédentaire en calories, cet excédent de calories peut avantageusement être utilisé comme source de chaleur pour chauffer un fluide ; c'est ce qu'illustre la figure 14 qui représente une unité de séchage. Dans cette unité, un gaz de séchage (de l'air par exemple) est amené à l'entrée 184 du premier circuit d'un échangeur de chaleur par surface 185, l'entrée 186 du second circuit de cet échangeur étant alimentée en fluide prélevé sur une installation d'évaporation à compression de vapeur dans le cycle de concentration de laquelle ont été transférées des calories à bas niveau thermique d'un fluide caloporteur ; il pourra s'agir par exemple de l'installation objet de la figure 9, l'entrée 186 étant dans ce cas alimentée de préférence en vapeur prélevée sur le conduit 125 de cette installation. Dans l'échangeur 185, ladite vapeur prélevée cède sa chaleur latente de vaporisation au gaz de séchage et se condense, les condensats étant évacués du second circuit de l'échangeur 185 par la sortie 187. Quant au gaz ainsi préchauffé et issu du premier circuit dudit échangeur, il est amené à sa température finale désirée dans un réchauffeur 188 avant d'être introduit dans une enceinte de séchage 189 alimentée par l'arrivée 190 en produit à sécher qui pourra notamment être constitué par le produit liquide concentré issu de l'effet 102 de l'installation de la figure 9. Le produit séché est extrait à la base de l'enceinte 189 par des moyens d'extraction 191 ; le gaz de séchage chargé de vapeur du diluant du produit à sécher est pour sa part évacué vers un séparateur 192 où il est débarrassé du produit séché éventuellement entraîné. Le gaz résultant éventuellement mélangé aux gaz créés dans le réchauffeur 188 (gaz chauds issus d'un réchauffeur dans lequel il y a combustion d'un combustible et transfert de calories dégagées par cette combustion au gaz de séchage) est ensuite utilisé comme fluide caloporteur dont les calories sont destinées à être transférées dans le cycle de concentration de l'installation d'évaporation sur lequel ont été prélevées les calories pour le préchauffage du gaz de séchage. Ce transfert pourra être réalisé conformément à la figure 9 (c'est ce que montre la figure 14) ou encore conformément aux figures 10 à 13. En variante, on pourra au préalable transférer les calories dudit fluide caloporteur à un liquide puis procéder au transfert des calories du liquide caloporteur résultant, dans le cycle de concentration, par exemple conformément aux techniques illustrées par les figures 8 à 13. Il est à noter par ailleurs que la vapeur prélevée sur l'installation d'évaporation à compression de vapeur peut être soumise, avant son échange thermique dans l'échangeur 185, à une compression (dans un compresseur mécanique ou dans un éjecto-compresseur) de manière à disposer d'une vapeur encore plus chaude pour le préchauffage du gaz de séchage. Il est possible également de réaliser les opérations illustrées par la figure 14 et de soumettre en outre le gaz de séchage issu de l'échangeur 185 à un échange thermique supplémentaire également au moyen de vapeur prélevée sur l'installation d'évaporation (par exemple sur le conduit 125 de l'installation de la figure 9) mais dont le niveau thermique aura préalablement été relevé au moyen d'un compresseur mécanique de vapeur ou par un éjecto-compresseur de vapeur, le gaz de séchage étant ainsi préchauffé progressivement en deux stades successifs.

L'unité de concentration représentée par la figure 15 est en tous points identique à celle représentée par la figure 8 et comporte donc les mêmes moyens 101 à 126 et fonctionne de la même manière.

L'installation de la figure 15 comprend par ailleurs une pompe à chaleur au moyen de laquelle des calories sont prélevées sur un gaz caloporteur et amenées à un niveau thermique permettant leur transfert ultérieur dans le cycle de concentration mis en oeuvre dans l'unité de concentration qui vient d'être décrite, cycle qui comprend essentiellement les deux stades d'évaporation successifs réalisés dans les effets 101, 102 et la compression réalisée dans le compresseur 124.

Cette pompe à chaleur est de conception identique à celle représentée par la figure 2 et comporte donc les mêmes moyens 27 à 43 et fonctionne de la même manière.

La sortie 38 est reliée par un conduit 244 à un ballon de détente 245 pourvu d'une sortie 246 de vapeur de détente à sa partie haute, d'une arrivée 247 d'eau et d'une sortie 248 à sa partie basse, reliée à l'aspiration d'une pompe 249 dont le refoulement est connecté à l'arrivée 36. L'ensemble 28-38-244-245-248-249-36 forme ainsi un circuit fermé dans lequel circule de l'eau. L'eau chaude produite dans le condenseur 28 est amenée dans le ballon de détente 245 où elle subit une détente avant d'être recyclée vers le faisceau tubulaire 32. La vapeur produite par cette détente s'échappe par la sortie 246

25 0133095

et elle est ensuite soumise à un échange thermique indirect avec le produit liquide à concentrer dans l'effet 101 ou l'effet 102, auquel cas la détente est réalisée pour que la vapeur de détente ait une température supérieure à celle de ce produit liquide. Cette vapeur de détente peut également être mélangée à la vapeur d'évaporation créée dans l'effet 101, ou à la vapeur d'évaporation créée dans l'effet 102, avant sa compression dans le compresseur 124 comme le montre la figure 15, la détente étant réalisée de manière à ce que la vapeur de détente ait la même température que la vapeur à laquelle elle est mélangée. Dans tous les cas, les calories véhiculées par ladite vapeur de détente se retrouvent dans le compresseur 124 où leur niveau thermique est amené à la valeur la plus élevée du cycle de concentration.

Bien entendu, le circuit fermé défini ci-dessus pourrait être remplacé par un circuit ouvert ; en outre, on pourrait en variante supprimer le ballon de détente 145 et se servir directement de l'eau réchauffée issue du condenseur 28 comme moyen de transfert de calories vers le cycle de concentration, par exemple en la soumettant à un échange thermique avec le produit liquide moins chaud destiné à être concentré dans l'effet 101 ou 102.

Les corps de chauffe des effets 101, 102 sont habituellement pourvus à leur partie haute d'une tubulure munie d'un diaphragme, cet ensemble permettant d'effectuer le dégazage desdits corps de chauffe. Ainsi, si l'on considère l'unité de concentration de la figure 15, les corps de chauffe 115, 116 pourraient être pourvus respectivement d'une tubulure 255, 256 de dégazage munie chacune d'un diaphragme 257, 258 dont l'ouverture est dimensionnée pour qu'il n'y ait pas de modification sensible de la pression et de la température régnant au sein de chacun des corps 115, 116. Les tubulures 255, 256 sont ensuite réunies en une tubulure unique 259 dans laquelle est ainsi véhiculé le mélange de dégazage incondensables - vapeur de chauffage extrait des corps 115, 116. Conformément à l'invention, ce mélange peut être utilisé en tant que gaz caloporteur et la tubulure 259 sera alors raccordée à l'arrivée 35.

L'unité de concentration représentée par la figure 16 est en tous points identique à celle représentée par la figure 8 et comporte donc les mêmes moyens 101 à 126 et fonctionne de la même manière.

Conformément à l'invention, on prélève des calories sur un fluide caloporteur et on soumet les calories ainsi prélevées à l'action d'une ouplusieurs compressions successives, l'une de ces compressions étant celle mise en oeuvre dans l'unité de concentration qui vient d'être décrite. Dans le cas de la figure 16, ce fluide caloporteur est constitué par un gaz. Différentes possibilités existent pour prélever des calories sur ce gaz caloporteur.

Comme le montre la figure 16, ce gaz est amené par le conduit 327 dans un laveur 328 pourvu à sa partie haute d'une arrivée 329 de liquide vaporisable, de l'eau par exemple ; cette eau absorbe les calories du gaz, le gaz refroidi résultant étant évacué du laveur 328 par un conduit 330. Quant à l'eau chaude ainsi obtenue, elle constitue un liquide caloporteur que l'on soumet à plusieurs détentes successives, par exemple deux, dans des caisses de détente 331, 332. Plus précisément, l'eau chaude est amenée par une pompe 333 et un conduit 334 terminé par un moyen de pulvérisation, dans la caisse 331 où elle subit une première détente, la vapeur libérée étant évacuée par un conduit 335. L'eau résultante est ensuite amenée via un conduit 336, également terminé par un moyen de pulvérisation, dans la caisse 332 où elle subit une deuxième détente, la vapeur libérée par cette détente étant évacuée par un conduit 337. Conformément à l'invention, on soumet la vapeur produite par au moins une des détentes, celle produite dans la caisse 332, dans l'exemple choisi, à une compression dans l'éjecto-compresseur 338 en reliant le conduit 337 à l'aspiration de cet éjecto-compresseur alimenté en vapeur motrice par le conduit 339. La vapeur issue du refoulement de l'éjecto-compresseur est ensuite soumise, toujours conformément à l'invention, à un échange thermique indirect avec le produit liquide à concentrer dans l'unité de concentration, ledit refoulement étant relié par un conduit 340 à l'entrée du premier circuit d'un échangeur de chaleur par surface 341 dont le second circuit est alimenté par l'entrée 342 en produit liquide à concentrer. Ce dernier se trouve ainsi réchauffé et est ensuite amené de la sortie 343 de ce second circuit via le conduit 344 relié à l'arrivée 105 de l'effet 101 de l'unité de concentration précédente. Les calories prélevées sur le gaz caloporteur se retrouvent donc finalement dans le produit liquide à concentrer et par suite dans la vapeur d'évaporation créée dans l'effet 102. Ces calories sont de ce fait soumises à l'effet du compresseur 124 et leur niveau thermique se trouve ainsi relevé jusqu'au niveau thermique le plus élevé régnant dans l'évaporateur.

Conformément à l'invention, on prélève ensuite des calories sur ledit évaporateur en un point où le niveau thermique est supérieur à celui des calories du gaz caloporteur et on transfère les calories ainsi prélevées à un fluide que l'on désire réchauffer. Ce fluide peut par exemple être constitué par de l'eau ou comme on le verra ci-après, par un gaz destiné à être mis en oeuvre dans une unité de séchage. Comme le montre plus précisément la figure 16, on prélève une partie de la vapeur refoulée par le compresseur 124, vapeur qui est donc au niveau thermique le plus élevé de l'installation d'évaporation. les calories contenues dans cette vapeur étant transférées au gaz de séchage d'une unité de séchage.

Dans cette unité, un gaz de séchage (de l'air par exmeple) est amené à l'entrée 345 du premier circuit d'un échangeur de chaleur par surface 346, l'entrée 347 du second circuit de cet échangeur étant alimentée par la vapeur prélevée sur le conduit 125 de l'unité d'évaporation. Dans l'échangeur 345, ladite vapeur prélevée cède sa chaleur latente de vaporisation au gaz de séchage et se condense, les condensats étant évacués du second conduit de l'échangeur 346 par la sortie 348. Quand au gaz ainsi préchauffé et issu du premier circuit dudit échangeur, il est amené à sa température finale désirée dans un réchauffeur 349 où il est amené à la température finale appropriée pour le séchage, avant d'être introduit dans une enceinte de séchage 350 alimentée par une arrivée 351 en produit à sécher qui pourra notamment être constitué par le produit liquide concentré issu de l'effet 102 de l'unité de concentration. Le produit séché est extrait à la base de l'enceinte 350 par des moyens d'extraction 352 ; le gaz de séchage chargé de vapeur du diluant du produit à sécher est pour sa part évacué vers un séparateur 353 où il est débarrassé du produit séché éventuellement entraîné. Le gaz résultant éventuellement mélangé aux gaz créés dans le réchauffeur 349 (gaz chauds issus d'un réchauffeur dans lequel il y a combustion d'un combustible et transfert de calories dégagées par cette combustion au gaz de séchage) est ensuite utilisé comme fluide caloporteur, le niveau thermique des calories de ce fluide étant destiné à être relevé dans l'unité de concentration. Ce gaz est donc amené par le conduit 327 dans le laveur 328.

Au lieu de soumettre la vapeur créée par détente du liquide caloporteur, à un échange thermique indirect avec le produit liquide à concentrer, il est possible également, dans le cas où ledit liquide caloporteur est même nature que le diluant du produit liquide à concentrer, d'amener cette vapeur, après compression éventuelle, directement dans le cycle de concentration de l'unité d'évaporation. Cette variante est illustrée par la figure 17 qui représente une installation comprenant une unité d'évaporation en tous points identique à celle de la figure 16. Comme le montre cette figure 17, le liquide caloporteur est soumis, comme dans la figure 16, à deux détentes successives dans les caisses de détente 331, 332. La vapeur de détente créée dans la caisse 331 est comprimée jusqu'à atteindre la pression correspondant à la température de la vapeur de chauffage de l'effet 102 et celle créée dans la caisse 332 est comprimée jusqu'à atteindre la pression correspondant à la température de la vapeur d'évaporation créée dans l'effet 102. Plus précisément, on relie les conduits 335, 337 respectivement à l'aspiration d'un compresseur 354, 355 (éjecto-compresseur dans le cas de la figure 17) alimenté en vapeur motrice par un conduit 356, 357, le refoulement du compresseur 354 étant relié par le conduit 358 à l'arrivée 118 de vapeur de chauffage de l'effet 102 et le refoulement du compresseur 355 étant relié par le conduit 359 au conduit 123. Comme dans le cas de la figure 16, le niveau thermique des calories prélevées sur le liquide caloporteur se trouve ainsi relevé jusqu'au niveau thermique le plus élevé de l'unité d'évaporation. Une variante du mode de réalisation illustré par la figure 17 est représentée par la figure 18 où le liquide caloporteur est soumis à trois détentes successives dans les caisses de détente 360, 361, 362 reliées en série par les conduits 363, 364. La vapeur créée dans la dernière caisse de détente 362 est comprimée par un compresseur 365 jusqu'à atteindre la pression régnant dans la caisse précédente 361, puis mélangée à la vapeur de détente créée dans cette dernière. Le mélange résultant est comprimé par un compresseur 366 jusqu'à la pression régnant dans la première caisse de détente 360, puis mélangée à la vapeur de détente créée dans cette dernière. Dans le cas illustré par la figure 18, la pression de détente dans la caisse 360 correspond à la température de la vapeur d'évaporation créée dans l'effet 102 et le mélange de vapeur disponible peut être amené directement par le conduit 367 dans le conduit 123.

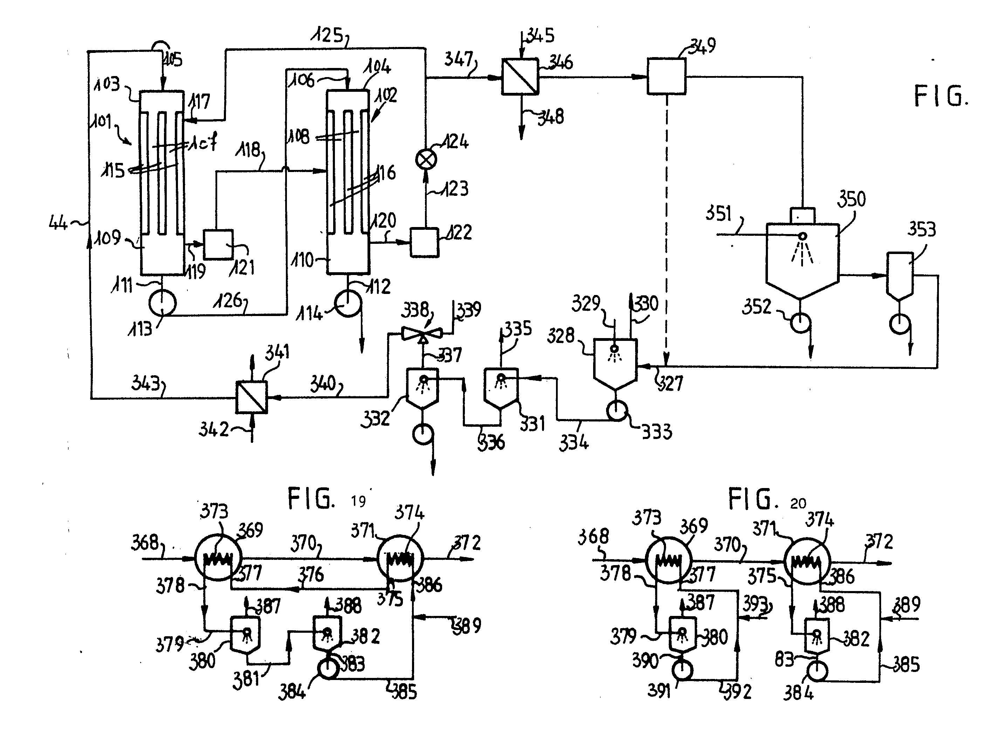

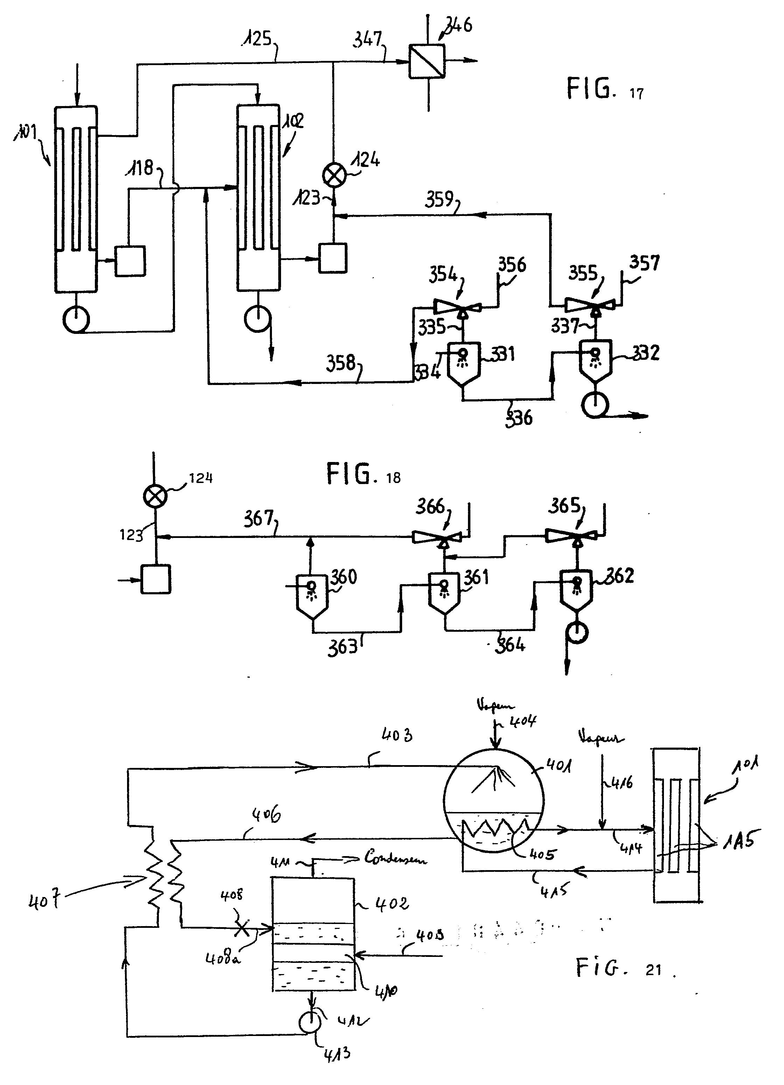

Il existe différents autres modes de prélèvement des calories sur le fluide caloporteur, certains de ces modes étant illustrés par les figures 19 et 20.

Dans le cas de la figure 19, le fluide caloporteur (gaz ou liquide) est soumis à deux échanges thermiques indirects avec un liquide vaporisable, de l'eau par exemple. Plus précisément, ce fluide est amené par un conduit 368 dans une enceinte 369, puis de cette dernière par un conduit 370 dans une enceinte 371 avant d'être évacué de cette dernière par un conduit 372. Par ailleurs, dans les enceintes 369, 371 sont disposés respectivement des serpentins 373, 374. La sortie 375 du serpentin 374 est reliée par un conduit 376 à l'entrée 377 du serpentin 373 dont la sortie 378 est reliée par un conduit 379 à une première caisse de détente 380 reliée par sa base et par un conduit 381 à une seconde caisse de détente 382. La base de cette dernière est pourvue d'un conduit d'extraction 383 aboutissant à l'aspiration d'une pompe d'extraction 384 dont le refoulement est relié par un conduit 385 à l'entrée 386 du serpentin 374. Dans le circuit fermé ainsi défini, circule de l'eau dans le sens 386-374-375-376-377-373-378-379-380-381-382-383-384-385-386. Cette eau se réchauffe donc progressivement en absorbant les calories du fluide caloporteur qui se refroidit progressivement. L'eau chaude issue de la sortie 378 est ensuite soumise à deux détentes successives dans les caisses 380, 382, la vapeurproduite par ces détentes étant évacuée desdites caisses respectivement par les conduits 387, 388. Les calories contenues dans cette vapeur sont en- suite transférées dans l'unité de concentration par exemple comme illustré par les figures 16 à 18. On notera encore que dans le conduit 385 débouche une arrivée 389 d'eau destinée à compenser l'eau évacuée sous forme de vapeur de détente.

La figure 20 est une variante du système de prélèvement illustré par la figure 19. Cette variante comporte les mêmes moyens que ceux apparaissant sur la figure 19, si ce n'est que la sortie 375 n'est plus reliée à l'arrivée 377, mais à la caisse de détente 382 et que la base de la caisse de détente 380 est pourvue d'un conduit d'extraction 390 aboutissant à l'aspiration d'une pompe d'extraction 391 dont le refoulement est relié par un conduit 392 à l'arrivée 377, ce conduit 392 portant une arrivée d'eau 393 ayant la même fonction que l'arrivée 389. Bien entendu, le mode de fonctionnement de ce système est analogue à celui du système illustré par la figure 19.

La figure 21 enfin, illustre le cas où la vapeur d'évaporation produite à au moins un stade d'évaporation du cycle de concentration, est soumise à l'action d'une pompe à chaleur du type à absorption de principe bien connu, avant d'être utilisée comme vapeur de chauffage pour le stade d'évaporation dont est issue ladite vapeur d'évaporation ou pour un stade d'évaporation précédans celui-ci. La figure 21 représente plus précisément une pompe à chaleur à absorption qui peut être substituée au compresseur 13, 62, 124 mis en oeuvre dans les figures décrites précédemment. Cette pompe à chaleur comprend un absorbeur 401 et un bouilleur 402. Une solution aqueuse (dite solution riche) apte à absorber de la vapeur en dégageant de la chaleur, par exemple une solution aqueuse de bromure de lithium, de soude ou de potasse, est amenée par un conduit 403 dans l'absorbeur 401 où elle est pulvérisée grâce à un moyen de pulvérisation terminant ledit conduit 403. La solution riche ainsi pulvérisée absorbe de la vapeur introduite dans l'absorbeur 401 par un conduit 404, absorption dont il résulte un dégagement de chaleur. La solution diluée résultante (dite solution pauvre) se rassemble à la base dudit absorbeur 401 où elle cède ses calories à un liquide vaporisable qui circule dans un échangeur de chaleur indirect 405 disposé dans l'absorbeur 401 et immergé dans ladite solution pauvre. Cette dernière est ensuite extraite de l'absorbeur 401 par un conduit 406, passe dans un échangeur de chaleur indirect 407, puis est détendue dans un détendeur 408 avant d'être introduite par un conduit 408a dans le bouilleur 402 où elle est concentrée sous l'effet de calories provenant de vapeur alimentant par un conduit 409 un échangeur de chaleur à surface 410 disposé dans le bouilleur 402 et immergé dans la solution à concentrer. La vapeur générée par cette concentration est évacuée à la partie haute de bouilleur 402 par un conduit de vapeur 411 relié à un condenseur. La solution concentrée résultante, dite solution riche, est ensuite extraite à la base du bouilleur 402, par une tubulure d'extraction 412, comprimée par une pompe 413, puis soumise à un échange thermique avec la solution pauvre dans l'échangeur 407 avant d'être ramenée par le conduit 403 dans l'absorbeur 401.

Supposons à titre d'exemple que la pompe à chaleur qui vient d'être décrite soit mise en oeuvre dans l'évaporateur représenté par la figure 8, en lieu et place du compresseur 124. Dans ce cas, le conduit 404 est relié au conduit 123 de manière à envoyer tout ou partie de la vapeur d'évaporation créée dans le dernier effet 102, dans l'absorbeur 401. D'autre part, la sortie de l'échangeur de chaleur 405 est reliée par un conduit 414 au corps de chauffe 115 du premier effet 101, l'entrée de cet échangeur 405 étant quant à elle reliée par un conduit 415 à la base dudit corps de chauffe 115. Les condensats produits dans le corps de chauffe 115 sont ainsi amenés par le conduit 415 dans l'échangeur 405 où leur sont transférées les calories de la solution pauvre ; les condensats résultants auxquels est adjointe de la vapeur vive d'appoint amenée par un conduit 416 sont ensuite ramenés par le conduit 414 dans le corps de chauffe 115 où ils se détendent enlibérant de la vapeur utilisée en tant que vapeur de chauffage dans l'effet 101. Bien entendu, les conduits 117 et 125 de l'évaporateur n'ayant plus lieu d'être, sont supprimés. On notera encore que la vapeur amenée par le conduit 409 pourra par exemple être constituée par une fraction de la vapeur d'évaporation créée dans le dernier effet 102.

Revendications

1. Procédé pour relever le niveau thermique des calories contenues dans un fluide caloporteur, caractérisé en ce qu'il consiste à prélever des calories sur le fluide caloporteur et à soumettre les calories ainsi prélevées à l'action d'une ou plusieurs pompes à chaleur, l'une de ces pompes à chaleur étant celle mise en oeuvre dans un cycle de concentration d'un produit liquide constitué par un produit solide en solution ou en suspension dans un diluant vaporisable, ce cycle comprenant un ou plusieurs stades d'évaporation successifs réalisés chacun par échange thermique indirect entre une vapeur de chauffage condensable et ledit produit liquide, échange au cours duquel ladite vapeur de chauffage se condense et cède sa chaleur latente de vaporisation audit produit liquide, ce dont il résulte des condensats et un produit liquide concentré, la vapeur produite à au moins un stade d'évaporation, dite vapeur d'évaporation, étant soumise à l'action d'une pompe à chaleur avant d'être utilisée comme vapeur de chauffage pour le stade d'évaporation dont est issue ladite vapeur d'évaporation à soumettre à l'action de ladite pompe à chaleur ou pour un stade précédant celui-ci.

2. Procédé selon la revendication 1, caractérisé en ce que la ou les pompes à chaleur sont du type à compression mécanique de vapeur, du type à éjecto-compression, du type à absorption et/ou du type avec fluide intermédiaire.

3. Procédé selon la revendication 1 ou 2, dans lequel le fluide caloporteur est un liquide caloporteur vaporisable ou unliquide vaporisable auquel ont été cédées les calories d'un gaz caloporteur, caractérisé en ce que l'on prélève les calories sur le fluide caloporteur en soumettant ce dernier à une ou plusieurs détentes successives et en ce que l'on soumet les calories de la vapeur de détente produite par au moins une de ces détentes, à l'action de ladite ou desdites pompes à chaleur.

4. Procédé selon la revendication 1 ou 2, caractérisé en ce que l'on prélève des calories sur le fluide caloporteur en effectuant un ou plusieurs échanges thermiques successifs entre le fluide caloporteur et un liquide vaporisable de manière à ce qu'au cours de ces échanges le fluide se refroidisse progressivement et le liquide vaporisable se réchauffe progressivement et en soumettant le liquide vaporisable résultant à une ou plusieurs détentes successives et en ce que l'on soumet les calories de la vapeur de détente produite par au moins une de ces détentes, à l'action de ladite ou desdites pompes à chaleur.

5. Procédé selon la revendication 4, caractérisé en ce que le dernier échange thermique est du type par mélange.

6. Procédé selon la revendication 1 ou 2, caractérisé en ce que l'on prélève des calories sur le fluide caloporteur en effectuant un ou plusieurs échanges thermiques indirects successifs entre le fluide caloporteur et respectivement un ou plusieurs liquides vaporisables et en soumettant chacun desdits liquides vaporisables résultants à une ou plusieurs détentes successives et en ce que l'on soumet les calories de la vapeur de détente produite par au moins une de ces détentes, à l'action de ladite ou desdites pompes à chaleur.

7. Procédé selon l'une quelconque des revendications 3 à 6, caractérisé en ce que l'on soumet éventuellement ladite vapeur de détente à l'action d'une pompe à chaleur puis soumet la vapeur résultante à un échange thermique avec un fluide du cycle de concentration.

8. Procédé selon la revendication 7, caractérisé en ce que le fluide du cycle de concentration est constitué par le produit liquide destiné à être concentré dans le stade d'évaporation dont est issue la vapeur d'évaporation à soumettre à l'action de la pompe à chaleur ou dans un stade d'évaporation précédant celui-ci.

9. Procédé selon l'une quelconque des revendications 3 à 6, dans lequel le liquide caloporteur ou le liquide vaporisable est de même nature que le diluant du produit liquide à concentrer, caractérisé en ce que l'on soumet ladite vapeur de détente à l'action d'une pompe à chaleur pour l'amener à la température d'une vapeur de chauffage du cycle de concentration autre que celle constituée par la vapeur d'évaporation soumise à l'action de la pompe à chaleur dudit cycle, puis joint la vapeur résultante à ladite vapeur de chauffage.

10. Procédé selon la revendication 9, caractérisé en ce que ladite vapeur de chauffage est celle destinée à être mise en oeuvre dans le stade d'évaporation dont est issue la vapeur d'évaporation à soumettre à l'action de la pompe à chaleur du cycle de concentration ou dans un stade précédant celui-ci.

11. Procédé selon l'une quelconque des revendications 3 à 6, dans lequel le liquide caloporteur ou le liquide vaporisable est de même nature que le diluant du produit liquide à concentrer, caractérisé en ce que l'on soumet ladite vapeur de détente à l'action d'une pompe à chaleur pour l'amener à la température de la vapeur d'évaporation à soumettre à l'action de la pompe à chaleur du cycle de concentration, puis joint à cette dernière la vapeur de détente résultante.

12. Procédé selon l'une quelconque des revendications 3 à 6, dans lequel le liquide caloporteur ou le liquide vaporisable est de même nature que le diluant du produit liquide à concentrer, caractérisé en ce que l'on réalise l'une des détentes à une pression correspondant à la température de la vapeur d'évaporation à soumettre à l'action de la pompe à chaleur du cycle de concentration et en ce que l'on joint la vapeur produite par cette détente à ladite vapeur d'évaporation.

13. Procédé selon la revendication 12, caractérisé en ce que l'on soumet à l'action d'une pompe à chaleur la vapeur produite par au moins l'une des autres détentes pour l'amener à la température de la vapeur d'évaporation à soumettre à l'action de la pompe à chaleur du cycle de concentration et en ce que l'on joint la vapeur résultante à ladite vapeur d'évaporation.

14. Procédé selon la revendication 12, caractérisé en ce que l'on soumet à l'action d'une pompe à chaleur la vapeur de détente produite par au moins une détente suivante pour l'amener à la température de la vapeur de détente produite par l'une des détentes précédentes avant de la joindre à cette dernière vapeur.

15. Procédé selon la revendication 1 ou 2, caractérisé en ce que l'on prélève des calories sur le fluide caloporteur en soumettant, dans l'évaporateur d'au moins une pompe à chaleur, le fluide caloporteur à un échange thermique indirect avec un gaz intermédiaire auquel sont ainsi transférées des calories dudit fluide caloporteur et en ce que l'on comprime le gaz intermédiaire résultant au moyen du compresseur de la pompe à chaleur pour amener les calories qu'il contient à un niveau thermique permettant leur transfert dans le cycle de concentration où elles sont soumises à l'action de la pompe à chaleur mise en oeuvre dans ce cycle.

16. Procédé selon la revendication 1 ou 2, caractérisé en ce que l'on prélève des calories sur le fluide caloporteur en effectuant un ou plusieurs échanges thermiques successifs entre le fluide caloporteur et un liquide intermédiaire pour réchauffer progressivement ce dernier avec refroidissement progressif du fluide caloporteur et en soumettant, dans l'évaporateur d'au moins une pompe à chaleur, le liquide intermédiaire réchauffé résultant à un échange thermique indirect avec un gaz intermédiaire auquel sont ainsi transférées des calories du liquide intermédiaire et en ce que l'on comprime le gaz intermédiaire pour amener les calories qu'il contient à un niveau thermique permettant leur transfert dans le cycle de concentration où elles sont soumises à l'action de la pompe à chaleur mise en oeuvre dans ce cycle.

17. Procédé selon la revendication 15 ou 16, caractérisé en ce que l'on réalise le transfert dans le cycle de concentration des calories du gaz intermédiaire comprimé, en soumettant ledit gaz intermédiaire comprimé à un échange thermique indirect avec un fluide moins chaud que ledit gaz et en soumettant à son tour le fluide résultant à un échange thermique indirect avec le produit liquide, moins chaud que ledit fluide, destiné à être concentré dans le stade d'évaporation du cycle de concentration, dont est issue la vapeur d'évaporation à soumettre à l'action de la pompe à chaleur de ce cycle ou dans l'un des stades d'évaporation précédant celui-ci.

18. Procédé selon la revendication 15 ou 16, caractérisé en ce que l'on réalise le transfert dans le cycle de concentration des calories du gaz intermédiaire comprimé, en soumettant ledit gaz intermédiaire comprimé à un échange thermique indirect avec un liquide vaporisable moins chaud que ledit gaz comprimé et en soumettant le liquide résultant à une détente, la vapeur de détente ainsi produite étant soumise à un échange thermique indirect avec le produit liquide, moins chaud que cette vapeur, destiné à être concentré dans le stade d'évaporation dont est issue la vapeur d'évaporation à soumettre à l'action de la pompe à chaleur de ce cycle ou dans l'un des stades d'évaporation précédant celui-ci.

19. Procédé selon la revendication 15 ou 16, caractérisé en ce que l'on réalise le transfert dans le cycle de concentration des calories du gaz intermédiaire comprimé, en soumettant ledit gaz intermédiaire comprimé à un échange thermique indirect avec un liquide vaporisable moins chaud que ledit gaz comprimé et en soumettant le liquide résultant à une détente, la vapeur de détente ainsi produite étant mélangée à la vapeur d'évaporation à soumettre à l'action de la pompe à chaleur du cycle de concentration ou à la vapeur de chauffage pour un stade d'évaporation du cycle de concentration, autre que celle constituée par la vapeur d'évaporation ayant subi l'action de la pompe à chaleur du cycle de concentration, ladite détente étant réalisée pour que ladite vapeur de détente ait la même température que ladite vapeur d'évaporation ou ladite vapeur de chauffage.

20. Procédé selon la revendication 19, caractérisé en ce que la vapeur de chauffage est celle destinée à être mise en oeuvre dans le stade d'évaporation dont est issue la vapeur d'évaporation à soumettre à l'action de la pompe à chaleur du cycle de concentration ou dans un stade précédant celui-ci.

21. Procédé selon la revendication 15 ou 16, caractérisé en ce que l'on réalise le transfert des calories du gaz intermédiaire comprimé, dans le cycle de concentration, en soumettant ledit gaz intermédiaire comprimé à un échange thermique indirect avec le produit liquide, moins chaud que ce gaz comprimé, destiné à être concentré dans le stade d'évaporation dont est issue la vapeur d'évaporation à soumettre à l'action de la pompe à chaleur du cycle de concentration ou dans l'un des stades d'évaporation prédédant celui-ci.

22. Procédé selon la revendication 1 ou 2, caractérisé en ce que l'on soumet le fluide caloporteur à un échange thermique indirect avec un fluide plus froid, en ce que l'on prélève des calories sur le fluide caloporteur résultant en soumettant ce dernier, dans l'évaporateur d'une pompe à chaleur, à un échange thermique indirect avec un gaz intermédiaire qui absorbe les calories du fluide caloporteur, en ce que l'on comprime le gaz intermédiaire dans le compresseur de la pompe à chaleur pour amener les calories prélevées sur le fluide caloporteur à un niveau thermique suffisant pour permettre leur transfert dans le cycle de concentration, en ce que l'on soumet ensuite le gaz intermédiaire comprimé à un échange thermique indirect avec le fluide caloporteur pour relever le niveau thermique de ce dernier avant de le soumettre à l'échange thermique avec ledit fluide, le fluide réchauffé au cours de cet échange étant utilisé comme moyen de transfert dans le cycle de concentration des calories prélevées sur le fluide caloporteur.

23. Procédé selon la revendication 22, caractérisé en ce que le fluide est constitué par le produit liquide à concentrer.

24. Procédé selon l'une quelconque des revendications 15 à 23, caractérisé en ce que le gaz intermédiaire ayant absorbé des calories du fluide caloporteur est comprimé mécaniquement ou par éjecto-compression.

25. Procédé selon la revendication 1 ou 2, caractérisé en ce que l'on prélève les calories sur le fluide caloporteur et les soumet à l'action de la ou des pompes à chaleur en transférant lesdites calories du fluide caloporteur par des opérations de mélange et/ou d'échange thermique, à au moins un fluide du cycle de concentration.

26. Procédé selon la revendication 25, caractérisé en ce que le fluide du cycle de concentration est constitué soit par le produit liquide destiné à être concentré dans le stade d'évaporation dont est issue la vapeur d'évaporation à soumettre à l'action de la pompe à chaleur dudit cycle ou dans l'un des stades d'évaporation précédents, soit par les condensats produits dans le stade d'évaporation dont est issue la vapeur d'évaporation à soumettre à l'action de la pompe à chaleur du cycle de concentration ou dans l'un des stades d'évaporation précédents.

27. Procédé selon la revendication 25 ou 26, caractérisé en ce qu'il consiste à transférer les calories du fluide caloporteur, à au moins un fluide du cycle de concentration, par échange thermique au moyen d'un fluide intermédiaire.

28. Procédé selon la revendication 26, dans lequel le fluide caloporteur est un liquide vaporisable à un niveau thermique supérieur à celui de la vapeur d'évaporation à soumettre à l'action de la pompe à chaleur du cycle de concentration, caractérisé en ce qu'il consiste à introduire le fluide caloporteur dans une zone d'échange thermique indirect du cycle de concentration, zone où sont produits des condensats et où le niveau thermique est supérieur au niveau thermique de la vapeur d'évaporation à soumettre à l'action de la pompe à chaleur dudit cycle, mais inférieur à celui du fluide caloporteur.

29. Procédé selon la revendication 26, caractérisé en ce qu'il consiste à réaliser un échange thermique indirect entre le fluide caloporteur et des condensats moins chauds que ledit fluide, au sein de la zone d'échange thermique où sont produits lesdits condensats et où le niveau thermique est supérieur à celui de la vapeur d'évaporation à soumettre à l'action de la pompe à chaleur du cycle de concentration.

30. Procédé selon la revendication 26, caractérisé en ce qu'il consiste à extraire des condensats moins chauds que le fluide caloporteur de la zone d'échange thermique où ils sont produits et où le niveau thermique est supérieur à celui de la vapeur d'évaporation à soumettre à l'action de la pompe à chaleur du cycle de concentration, à en soumettre une partie à un échange thermique indirect avec le fluide caloporteur, puis à ramener dans ladite zone les condensats ayant été soumis à cet échange thermique, le niveau thermique de ces derniers étant supérieur à celui de ladite vapeur d'évaporation à soumettre à l'action de ladite pompe à chaleur.

**0133095**

31. Procédé selon la revendication 26, caractérisé en ce qu'il consiste à réaliser un échange thermique indirect entre le fluide caloporteur et le produit liquide à concentrer moins chaud.

32. Procédé selon la revendication 31, caractérisé en ce qu'avant d'être soumis à cet échange thermique, le produit liquide à concentrer est soumis à un échange thermique indirect avec les condensats produits dans l'un au moins des stades d'évaporation.

33. Procédé selon la revendication 26, caractérisé en ce qu'il consiste à réaliser un premier échange thermique indirect entre le fluide caloporteur et des condensats moins chauds que ce fluide, les condensats résultants étant ensuite soumis à un deuxième échange thermique indirect avec le produit liquide à concentrer.

34. Procédé selon la revendication 33, caractérisé en ce qu'avant d'être soumis au premier échange thermique, les condensats sont soumis à un échange thermique indirect avec le produit liquide à concentrer résultant du deuxième échange thermique.

35. Procédé selon la revendication 26, caractérisé en ce qu'il consiste à mélanger le fluide caloporteur et des condensats, puis à réaliser un échange thermique indirect entre le mélange résultant et le produit liquide à concentrer.

36. Procédé selon la revendication 35, caractérisé en ce que le produit liquide à concentrer résultant dudit échange thermique est soumis à un échange thermique indirect avec les condensats avant leur mélange avec le fluide caloporteur.

37. Procédé selon la revendication 26, caractérisé en ce qu'une fraction du produit liquide à concentrer est soumise à un échange thermique indirect avec le fluide caloporteur, une autre fraction du produit liquide à concentrer est soumise à un échange thermique indirect avec les condensats et en ce que les fractions résultant de ces échanges sont réunies avant d'être traitées dans le cycle de concentration.

38. Procédé selon la revendication 27, caractérisé en ce qu'il consiste à réaliser un échange thermique indirect entre le produit liquide à concentrer et des condensats plus chauds. à soumettre une fraction des condensats refroidis issus de cet échange, à un échange thermique indirect avec le fluide caloporteur plus chaud puis à mélanger les condensats ainsi réchauffés à ceux destinés à être soumis à l'échange thermique avec le produit liquide à concentrer.

39. Procédé selon l'une quelconque des revendications précédentes. caractérisé en ce que le fluide caloporteur est constitué par tout fluide produit au cours de l'évaporation du produit liquide à concentrer.

40. Procédé selon la revendication 39, caractérisé en ce que le liquide caloporteur est constitué par tout ou partie des condensats et/ou du produit liquide concentré.

41 Procédé selon l'une quelconque des revendications précédentes dans lequel le cycle de concentration comporte plusieurs stades d'évaporation, ces derniers étant réalisés respectivement dans des chambres d'évaporation associées chacune à un corps de chauffe alimenté en vapeur de chauffage avec extraction en continu des incondensables d'au moins un corps de chauffe sous la forme d'un mélange d'incondensables et de vapeur de chauffage, caractérisé en ce que le fluide caloporteur est constitué par le mélange incondensables-vapeur de chauffage extrait d'un corps de chauffe qui n'est pas au niveau thermique le plus élevé du cycle de concentration.

42. Procédé pour chauffer un fluide. caractérisé en ce qu'il consiste à transférer à ce fluide des calories prélevées sur le cycle de concentration mis en oeuvre dans le procédé selon l'une quelconque des revendications précédentes.

43. Procédé selon la revendication 42, caractérisé en ce qu'il consiste à réaliser un échange thermique entre ledit fluide à chauffer et un fluide quelconque du cycle de concentration.

44. Procédé selon la revendication 43, caractérisé en ce que le fluide du cycle de concentration est constitué par la vapeur d'évaporation ayant subi l'action de la pompe à chaleur dudit cycle.

45. Procédé selon la revendication 44, caractérisé en ce que la vapeur d'évaporation ayant subi l'action de la pompe à chaleur est soumise à l'action d'au moins une pompe à chaleur supplémentaire avant son échange thermique avec le fluide à réchauffer.

46. Procédé selon l'une quelconque des revendications 42 à 45, caractérisé en ce que le fluide à réchauffer est de l'eau.

47. Procédé selon l'une quelconque des revendications 42 à 45, caractérisé en ce que le fluide à réchauffer est constitué par le gaz destiné à être utilisé comme gaz de séchage dans le cycle de séchage d'un produit à sécher.

48. Procédé selon la revendication 47, dans lequel le cycle de séchage comprend le préchauffage d'un gaz de séchage au moyen des calories prélevées sur le cycle de concentration, le chauffage dans un réchauffeur du gaz ainsi préchauffé, jusqu'à la température finale requise pour le séchage, l'échange thermique direct entre le gaz résultant et le produit concentré issu du cycle de concentration ou tout autre produit à sécher pour obtenir un produit séché et un fluide gazeux comprenant ledit gaz de séchage et la vapeur de diluant provenant du produit à sécher et la séparation de ce fluide gazeux du produit séché, caractérisé en ce que ledit fluide gazeux, les gaz chauds éventuellement créés dans le réchauffeur et/ou un liquide auquel ont préalablement été transférées les calories du fluide gazeux et/ou desdits gaz chauds sont utilisés en tant que fluide caloporteur pour le procédé selon l'une quelconque des revendications précédentes.

0133095

## FIG.1

2/8

**0133095**

FIG. 2

FIG. 3

Produit à concentrer rechauffé (61°C) — 38 — ... — 36 — Produit à concentrer (45°C)

Condensats (60°C) — 35 — ... — 37 — Condensats (43°C)

FIG. 4

Produit à concentrer rechauffé (61°C) — 38 — ... — 36 — Produit à concentrer (55°C)

Condensats (48°C) — 35 — ... — 37 — Condensats (43°C)

FIG. 5

Condensats (60°C) — 36 — ... — 38 — (65°C) — 4 — Produit à concentrer rechauffé (61°C)

Condensats (43°C) — 37 — ... — 35 — (48°C) — 19 — Produit à concentrer (45°C)

0133095

FIG.6

FIG.7

4/8

0133095

FIG. 8

FIG. 9

FIG. 10

FIG. 11

Condensats

Fluide caloporteur

FIG. 12

FIG. 13

FIG. 14

FIG. 15

FIG. 16

FIG. 19

FIG. 20

FIG. 17

FIG. 18

FIG. 21.

**0133095**
Numéro de la demande

Office européen
des brevets

**RAPPORT DE RECHERCHE EUROPEENNE**

EP    84 40 1476

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-4 247 371  (ROLLER P.S.) <br> * Colonne 5, ligne 36 - colonne 8, ligne 56; figures * | 1-3 | B 01 D    1/28 <br> B 01 D    3/00 |
| | --- | | |
| Y | US-A-4 357 214  (LA MORI et al.) <br> * Abrégé;  colonne 4, lignes 21-30;  colonne 7, lignes 9-21; figures 1,6 * | 1 | |
| A | | 2 | |
| | --- | | |
| Y | FR-A-2 505 667  (LAGUILHARRE SA) <br> * En entier * | 1 | |
| A | | 2 | |
| | --- | | **DOMAINES TECHNIQUES RECHERCHES (Int. Cl. 3)** |
| X | WO-A-8 202 587  (TECHMARK CORP.) <br> * Abrégé;  page 13,  ligne 18 - page 15, ligne 36 * | 1,2,22 | B 01 D |
| | --- | | |
| X | GB-A-2 074 463  (BUCKAU) <br><br> * Page 2, ligne 83  - page 3, ligne 41; figure 1 * | 1-3,7, 8,39, 40,42-44 | |
| | --- | | |
| A | US-A-2 777 514  (A.W. ECKSTROM) <br> * Colonne 2, ligne 30 - colonne 5, ligne 51; figure 1 * | 1,2 | |
| | ---                    -/- | | |

Le présent rapport de recherche a été établi pour toutes les revendications

| Lieu de la recherche <br> LA HAYE | Date d'achèvement de la recherche <br> 23-10-1984 | Examinateur <br> VAN BELLEGHEM W.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03. 82

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 472 942 (BUCKAU)<br>* Page 3, lignes 19-28; figures * | 1 | |
| A | EP-A-0 042 605 (A/S NIRO ATOMIZER)<br>* Page 2, ligne 25 - page 3, ligne 30; page 7, ligne 8 - page 9, ligne 16; figures * | 1,25, 26,28 | |
| A | US-A-3 243 359 (D. SCHMIDT)<br>* Colonne 1, ligne 48 - colonne 2, ligne 62; figure 1 * | 1,2,25 ,26,31 | |
| A | FR-A-2 409 779 (COMMISSARIAT A L'ENERGIE ATOMIQUE)<br>* Page 4, ligne 34 - page 6, ligne 33; figure 1 * | 31 | |
| A | DE-A-3 039 959 (GENERAL ELECTRIC)<br>* Page 12, ligne 12 - page 16; figures * | 1,2 | DOMAINES TECHNIQUES RECHERCHES (Int. Cl. 3) |

Le présent rapport de recherche a été établi pour toutes les revendications

| Lieu de la recherche<br>LA HAYE | Date d'achèvement de la recherche<br>23-10-1984 | Examinateur<br>VAN BELLEGHEM W.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant